(19) Europäisches Patentamt
European Patent Office
Office européen des brevets

(11) **EP 4 539 367 A1**

(12) **EUROPEAN PATENT APPLICATION**
published in accordance with Art. 153(4) EPC

(43) Date of publication:
**16.04.2025 Bulletin 2025/16**

(21) Application number: **23826082.2**

(22) Date of filing: **29.05.2023**

(51) International Patent Classification (IPC):
*H04L 1/00* (2006.01)

(52) Cooperative Patent Classification (CPC):
**H04L 1/00**

(86) International application number:
**PCT/CN2023/096925**

(87) International publication number:
**WO 2023/246433 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022 CN 202210718953**

(71) Applicant: **Huawei Technologies Co., Ltd.**
**Shenzhen, Guangdong 518129 (CN)**

(72) Inventors:
• **LI, Jiahui**
**Shenzhen, Guangdong 518129 (CN)**

• **MA, Mengyao**
**Shenzhen, Guangdong 518129 (CN)**
• **TANG, Zihan**
**Shenzhen, Guangdong 518129 (CN)**
• **GU, Jiaqi**
**Shenzhen, Guangdong 518129 (CN)**
• **LIN, Wei**
**Shenzhen, Guangdong 518129 (CN)**
• **XIE, Junwen**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **CODING AND DECODING METHODS AND RELATED DEVICE**

(57) This application discloses encoding and decoding methods and a related apparatus, and is applied to the coding field. The method includes: obtaining a to-be-encoded first transport block; obtaining F sub-transport blocks based on the first transport block, where probability distributions of all preprocess blocks included in any sub-transport block belong to a same probability distribution range, and probability distributions of preprocess blocks included in at least two of the F sub-transport blocks belong to different probability distribution ranges; encoding the F sub-transport blocks to obtain a second transport block, where the second transport block includes F encoded sub-transport blocks, and at least two of the F encoded sub-transport blocks correspond to different code rates; and performing transmission based on the second transport block. A plurality of sub-transport blocks are obtained from one TB through grouping and reorganization, and CBs in a same sub-transport block may match a same MCS for encoding and decoding operations. This facilitates code block alignment and hardware implementation at a receive end and a transmit end.

```
                                                    901
┌─────────────────────────────────────────┐
│ A transmit end obtains a to-be-encoded   │
│ first transport block                    │
└─────────────────────────────────────────┘
                    │
                    ▼                        902
┌─────────────────────────────────────────┐
│ The transmit end obtains F sub-transport │
│ blocks based on the first transport block│
└─────────────────────────────────────────┘
                    │
                    ▼                        903
┌─────────────────────────────────────────┐
│ Encode the F sub-transport blocks to     │
│ obtain a second transport block          │
└─────────────────────────────────────────┘
                    │
                    ▼                        904
┌─────────────────────────────────────────┐
│ Perform transmission based on the second │
│ transport block                          │
└─────────────────────────────────────────┘
```

FIG. 9

**Description**

This application claims priority to Chinese Patent Application No. 202210718953.6, filed with the China National Intellectual Property Administration on June 23, 2022 and entitled "ENCODING AND DECODING METHODS AND RELATED APPARATUS", which is incorporated herein by reference in its entirety.

**TECHNICAL FIELD**

This application relates to the coding field, and in particular, to encoding and decoding methods and a related apparatus.

**BACKGROUND**

Existing communication systems such as a cellular system and a wireless fidelity (wireless fidelity, Wi-Fi) system are usually based on a separate source-channel coding (separate source-channel coding, SSCC) solution. In the SSCC solution, it is assumed that source coding has been completed at an upper layer (for example, an application layer) to obtain approximately equal sequences, and a channel coding function is completed only at a physical layer. However, in many scenarios (for example, for application data and cellular control information of a mobile phone), a to-be-encoded bit stream before physical layer channel coding processing still has strong sparsity. In addition, in a new application scenario (for example, wireless signal sensing or imaging) of a future communication system, for example, a future cellular system or a future Wi-Fi system, corresponding data still has sparsity to some extent after being preprocessed.

Joint source-channel coding (joint source-channel coding, JSCC) can use sparsity of a source bit stream to implement both compression and channel protection operations on a source.

In a current encoding and decoding solution that can implement compression on a source, a common problem is that encoding and decoding difficulty is great. Therefore, an encoding and decoding solution with low encoding and decoding difficulty needs to be studied.

**SUMMARY**

Embodiments of this application disclose encoding and decoding methods and a related apparatus, to reduce encoding and decoding difficulty and reduce signaling overheads while implementing compression on a source.

According to a first aspect, an embodiment of this application provides an encoding transmission method. The method includes: obtaining a to-be-encoded first transport block; obtaining F sub-transport blocks based on the first transport block, where any sub-transport block includes at least one preprocess block, probability distributions of all preprocess blocks included in the any sub-transport block belong to a same probability distribution range, probability distributions of preprocess blocks included in at least two of the F sub-transport blocks belong to different probability distribution ranges, and F is an integer greater than 1; encoding the F sub-transport blocks to obtain a second transport block, where the second transport block includes F encoded sub-transport blocks, at least two of the F encoded sub-transport blocks correspond to different code rates, and the F encoded sub-transport blocks are obtained by encoding the F sub-transport blocks; and performing transmission based on the second transport block.

In this embodiment of this application, the probability distributions of all the preprocess blocks included in the any sub-transport block belong to the same probability distribution range. In this way, CBs in a same sub-transport block may match a same modulation and coding scheme (modulation and coding scheme, MCS) for encoding and decoding operations. This facilitates code block alignment and hardware implementation at a receive end and a transmit end.

In a possible implementation, the method further includes: sending first information carrying a first field, where the first field indicates a correspondence between the F sub-transport blocks and a bit stream in the first transport block, and/or indicates a probability distribution range to which a preprocess block included in each of the F sub-transport blocks belongs.

In this implementation, the first information carrying the first field is sent, so that the receive end obtains, based on the first information, the correspondence between the F sub-transport blocks and the bit stream in the first transport block or the probability distribution range to which the preprocess block included in each of the F sub-transport blocks belongs, to obtain the first transport block through decoding.

In a possible implementation, the first transport block includes B preprocess blocks, the first field includes B second fields, and the B second fields indicate probability distribution ranges corresponding to the B preprocess blocks. That the first field includes B second fields may be that the first field is used to obtain the B second fields through decoding. In this application, the probability distribution ranges corresponding to the B preprocess blocks may be probability distribution ranges to which probability distributions of the B preprocess blocks belong.

In this implementation, the B second fields indicate the probability distribution ranges corresponding to the B preprocess blocks, so that the receive end obtains the correspondence between the F sub-transport blocks and the bit stream in the first transport block based on the B second fields. In addition, the B second fields occupy a fixed length, and may be transmitted together with data information (that is, the encoded sub-transport blocks), so that control resource overheads can be reduced.

In a possible implementation, a length of the preprocess block is T times a length of a codeword, and T is an integer greater than 1.

In this implementation, the length of the preprocess block is T times the length of the codeword, so that it is ensured that any sub-transport block can be divided into an integer quantity of codewords.

In a possible implementation, the first field is used to obtain F third fields (that is, indication fields below) through decoding, a first sub-transport block in the F sub-transport blocks includes H preprocess blocks, the F third fields are in one-to-one correspondence with the F sub-transport blocks, a third field that is in the F third fields and that corresponds to the first sub-transport block indicates a quantity of preprocess blocks in the first sub-transport block and a sequence number (which may be referred to as a number) of each preprocess block of the first sub-transport block in the first transport block, the first sub-transport block is any sub-transport block in the F sub-transport blocks, and H is an integer greater than 0 and less than B.

In this implementation, the first field is used to obtain the F third fields through decoding, so that the receive end obtains the correspondence between the F sub-transport blocks and the bit stream in the first transport block based on the F third fields.

In a possible implementation, the first field is used to obtain B fourth fields (that is, bitmaps below) through decoding, the first transport block includes the B preprocess blocks, the B fourth fields are in one-to-one correspondence with the B preprocess blocks, and the B fourth fields indicate sub-transport blocks corresponding to the B preprocess blocks.

In this implementation, the first field is used to obtain the B fourth fields through decoding, so that the receive end obtains the correspondence between the F sub-transport blocks and the bit stream in the first transport block based on the B fourth fields.

In a possible implementation, the method further includes: sending first control information to a receive end, where the first control information indicates a length of each of the F encoded sub-transport blocks.

In this implementation, the first control information is sent to the receive end, and the receive end learns of the length of each encoded sub-transport block.

In a possible implementation, the first information is information sent during transmission based on the second transport block. In other words, the first field is included in the information sent during the transmission based on the second transport block. Optionally, the first field is included in the second transport block.

In this implementation, the first information is the information sent during the transmission based on the second transport block, and transmission is implemented by performing a multiplexing operation on the first field and the corresponding data information (that is, the F encoded sub-transport blocks), so that allocated transmission resources can be fully utilized.

In a possible implementation, the first control information further includes the first field, the first field includes the F third fields, the first sub-transport block in the F sub-transport blocks includes the H preprocess blocks, the F third fields are in one-to-one correspondence with the F sub-transport blocks, the third field that is in the F third fields and that corresponds to the first sub-transport block indicates the quantity of preprocess blocks in the first sub-transport block and the sequence number of each preprocess block of the first sub-transport block in the first transport block, the first sub-transport block is any sub-transport block in the F sub-transport blocks, and H is an integer greater than 0 and less than B.

In this implementation, the first field includes the F third fields. Because F is a variable, a length of the first field is not fixed. The first field is carried in the first control information, so that signaling overheads can be reduced.

In a possible implementation, the encoding the F sub-transport blocks to obtain a second transport block includes: separately encoding the F sub-transport blocks to obtain the F encoded sub-transport blocks, where at least two of the F sub-transport blocks correspond to different coding matrices.

In this implementation, the F sub-transport blocks are separately encoded to obtain the F encoded sub-transport blocks. This facilitates CB alignment and hardware implementation at the receive end and the transmit end.

In a possible implementation, the method further includes: receiving first retransmission information, where the first retransmission information indicates to retransmit a first code block group in the first sub-transport block, the first sub-transport block is one of the F encoded sub-transport blocks, and the first sub-transport block includes a plurality of code block groups.

In this implementation, the first retransmission information indicates to retransmit the first code block group in the first sub-transport block, so that a code block group that needs to be retransmitted can be accurately indicated.

According to a second aspect, an embodiment of this application provides a decoding method. The method includes: obtaining a second transport block, where the second transport block includes F encoded sub-transport blocks, at least two of the F encoded sub-transport blocks correspond to different code rates, the F encoded sub-transport blocks are obtained by encoding F sub-transport blocks, any sub-transport block includes at least one preprocess block, probability distributions of all preprocess blocks included in the any sub-transport block belong to a same probability distribution range, probability distributions of preprocess blocks included in at least two of the F sub-transport blocks belong to different probability distribution ranges, F is an integer greater than 1, and the F sub-transport blocks are obtained based on a first transport block; and obtaining the first transport block through decoding based on the second transport block.

In this embodiment of this application, the probability distributions of all the preprocess blocks included in the any sub-transport block belong to the same probability distribution range. In this way, CBs in a same sub-transport block may match a same MCS for decoding operations. This facilitates code block alignment and hardware implementation at a receive end.

In a possible implementation, the method further includes: receiving first information carrying a first field, where the first field indicates a correspondence between the F sub-transport blocks and a bit stream in the first transport block, and/or indicates a probability distribution range to which a preprocess block included in each of the F sub-transport blocks belongs.

In this implementation, the first information carrying the first field is received, so that the correspondence between the F sub-transport blocks and the bit stream in the first transport block or the probability distribution range to which the preprocess block included in each of the F sub-transport blocks belongs is obtained based on the first information, to obtain the first transport block through decoding.

In this implementation, the second transport block further includes the first field, and transmission is implemented by performing a multiplexing operation on control information and corresponding data information, so that allocated transmission resources can be fully utilized.

In a possible implementation, the first transport block includes B preprocess blocks, the first field includes B second fields, and the B second fields indicate probability distribution ranges corresponding to the B preprocess blocks.

In this implementation, the B second fields indicate the probability distribution ranges corresponding to the B preprocess blocks, so that the receive end obtains the correspondence between the F sub-transport blocks and the bit stream in the first transport block based on the B second fields. In addition, the B second fields occupy a fixed length, and are transmitted together with the data information (that is, the encoded sub-transport blocks), so that control resource overheads can be reduced.

In a possible implementation, a length of the preprocess block is T times a length of a codeword, and T is an integer greater than 0.

In this implementation, the length of the preprocess block is T times the length of the codeword, so that it is ensured that any sub-transport block can be divided into an integer quantity of codewords.

In a possible implementation, the first field is used to obtain F third fields through decoding, a first sub-transport block in the F sub-transport blocks includes H preprocess blocks, the F third fields are in one-to-one correspondence with the F sub-transport blocks, a third field that is in the F third fields and that corresponds to the first sub-transport block indicates a quantity of preprocess blocks in the first sub-transport block and a sequence number (which may be referred to as a number) of each preprocess block of the first sub-transport block in the first transport block, the first sub-transport block is any sub-transport block in the F sub-transport blocks, and H is an integer greater than 0 and less than B.

In this implementation, the first field is used to obtain the F third fields through decoding, so that the receive end obtains the correspondence between the F sub-transport blocks and the bit stream in the first transport block based on the F third fields.

In a possible implementation, the first field is used to obtain B fourth fields through decoding, the first transport block includes the B preprocess blocks, the B fourth fields are in one-to-one correspondence with the B preprocess blocks, and the B fourth fields indicate sub-transport blocks corresponding to the B preprocess blocks.

In this implementation, the first field is used to obtain the B fourth fields through decoding, so that the receive end obtains the correspondence between the F sub-transport blocks and the bit stream in the first transport block based on the B fourth fields.

In a possible implementation, the method further includes: receiving first control information from a transmit end, where the first control information indicates a length of each of the F encoded sub-transport blocks. The obtaining the first transport block through decoding based on the second transport block includes: obtaining the first transport block through decoding based on the second transport block and the first control information.

In this implementation, the first transport block can be accurately obtained through decoding based on the second transport block and the first control information.

In a possible implementation, the first information is information sent by the transmit end during transmission based on the second transport block. In other words, the first field is included in the information sent by the transmit end during the transmission based on the second transport block. Optionally, the first field is included in the second transport block.

In this implementation, the first information is the information sent by the transmit end during the transmission based on the second transport block, and transmission is implemented by performing a multiplexing operation on the first field and the corresponding data information (that is, the F encoded sub-transport blocks), so that allocated transmission resources can be fully utilized.

In a possible implementation, the first control information further includes the first field, the second transport block does not include the first field, the first field includes the F third fields, the first sub-transport block in the F sub-transport blocks includes the H preprocess blocks, the F third fields are in one-to-one correspondence with the F sub-transport blocks, the third field that is in the F third fields and that corresponds to the first sub-transport block indicates the quantity of preprocess blocks in the first sub-transport block and the sequence number of each preprocess block of the first sub-transport block in the first transport block, the first sub-transport block is any sub-transport block in the F sub-transport blocks, and H is an integer greater than 0 and less than B.

In this implementation, the first field includes the F third fields. Because F is a variable, a length of the first field is not fixed. The first field is carried in the first control information, so that signaling overheads can be reduced.

In a possible implementation, the method further includes: sending first retransmission information, where the first retransmission information indicates to retransmit a first code block group in the first sub-transport block, the first sub-transport block is one of the F encoded sub-transport blocks, and the first sub-transport block includes a plurality of code block groups.

In this implementation, the first retransmission information indicates to retransmit the first code block group in the first sub-transport block, so that a code block group that needs to be retransmitted can be accurately indicated.

According to a third aspect, an embodiment of this application provides a communication apparatus. The communication apparatus has a function of implementing behavior in the method embodiment in the first aspect. The communication apparatus may be a communication device, or may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to obtain a to-be-encoded first transport block. The processing module is further configured to obtain F sub-transport blocks based on the first transport block, where any sub-transport block includes at least one preprocess block, probability distributions of all preprocess blocks included in the any sub-transport block belong to a same probability distribution range, probability distributions of preprocess blocks included in at least two of the F sub-transport blocks belong to different probability distribution ranges, and F is an integer greater than 1. The processing module is further configured to encode the F sub-transport blocks to obtain a second transport block, where the second transport block includes F encoded sub-transport blocks, at least two of the F encoded sub-transport blocks correspond to different code rates, and the F encoded sub-transport blocks are obtained by encoding the F sub-transport blocks. The transceiver module is configured to perform transmission based on the second transport block.

In a possible implementation, the transceiver module is further configured to send first information carrying a first field, where the first field indicates a correspondence between the F sub-transport blocks and a bit stream in the first transport block, and/or indicates a probability distribution range to which a preprocess block included in each of the F sub-transport blocks belongs.

In a possible implementation, the first transport block includes B preprocess blocks, the first field includes B second fields, and the B second fields indicate probability distribution ranges corresponding to the B preprocess blocks. That the first field includes B second fields may be that the first field is used to obtain the B second fields through decoding.

In a possible implementation, the first field is used to obtain F third fields (that is, indication fields below) through decoding, a first sub-transport block in the F sub-transport blocks includes H preprocess blocks, the F third fields are in one-to-one correspondence with the F sub-transport blocks, a third field that is in the F third fields and that corresponds to the first sub-transport block indicates a quantity of preprocess blocks in the first sub-transport block and a sequence number (which may be referred to as a number) of each preprocess block of the first sub-transport block in the first transport block, the first sub-transport block is any sub-transport block in the F sub-transport blocks, and H is an integer greater than 0 and less than B.

In a possible implementation, the first field is used to obtain B fourth fields (that is, bitmaps below) through decoding, the first transport block includes the B preprocess blocks, the B fourth fields are in one-to-one correspondence with the B preprocess blocks, and the B fourth fields indicate sub-transport blocks corresponding to the B preprocess blocks.

In a possible implementation, the transceiver module is further configured to send first control information to a receive end, where the first control information indicates a length of each of the F encoded sub-transport blocks.

In a possible implementation, the first information is information sent during transmission based on the second transport block. In other words, the first field is included in the information sent during the transmission based on the second transport block. Optionally, the first field is included in the second transport block.

In a possible implementation, the first control information further includes the first field, the second transport block does not include the first field, the first field includes the F third fields, the first sub-transport block in the F sub-transport blocks includes the H preprocess blocks, the F third fields are in one-to-one correspondence with the F sub-transport blocks, the third field that is in the F third fields and that corresponds to the first sub-transport block indicates the quantity of preprocess blocks in the first sub-transport block and the sequence number of each preprocess block of the first sub-transport block in the first transport block, the first sub-transport block is any sub-transport block in the F sub-transport blocks, and H is an integer greater than 0 and less than B.

In a possible implementation, the processing module is specifically configured to separately encode the F sub-transport blocks to obtain the F encoded sub-transport blocks, where at least two of the F sub-transport blocks correspond to different coding matrices.

In a possible implementation, the transceiver module is further configured to receive first retransmission information, where the first retransmission information indicates to retransmit a first code block group in the first sub-transport block, the first sub-transport block is one of the F encoded sub-transport blocks, and the first sub-transport block includes a plurality of code block groups.

For technical effect achieved by the possible implementations of the third aspect, refer to descriptions of technical effect of the first aspect or the possible implementations of the first aspect.

According to a fourth aspect, an embodiment of this application provides a communication apparatus. The communication apparatus has a function of implementing behavior in the method embodiment in the second aspect. The communication apparatus may be a communication device, or may be a component (for example, a processor, a chip, or a chip system) of the communication device, or may be a logic module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a second signal. The processing module is configured to obtain a second transport block based on the second signal, where the second transport block includes F encoded sub-transport blocks, at least two of the F encoded sub-transport blocks correspond to different code rates, the F encoded sub-transport blocks are obtained by encoding F sub-transport blocks, any sub-transport block includes at least one preprocess block, probability distributions of all preprocess blocks included in the any sub-transport block belong to a same probability distribution range, probability distributions of preprocess blocks included in at least two of the F sub-transport blocks belong to different probability distribution ranges, F is an integer greater than 1, and the F sub-transport blocks are obtained based on a first transport block. The processing module is further configured to obtain the first transport block through decoding based on the second transport block.

In a possible implementation, the transceiver module is further configured to receive first information carrying a first field, where the first field indicates a correspondence between the F sub-transport blocks and a bit stream in the first transport block, and/or indicates a probability distribution range to which a preprocess block included in each of the F sub-transport blocks belongs.

In a possible implementation, the first transport block includes B preprocess blocks, the first field includes B second fields, and the B second fields indicate probability distribution ranges corresponding to the B preprocess blocks.

In a possible implementation, the first field is used to obtain F third fields through decoding, a first sub-transport block in the F sub-transport blocks includes H preprocess blocks, the F third fields are in one-to-one correspondence with the F sub-transport blocks, a third field that is in the F third fields and that corresponds to the first sub-transport block indicates a quantity of preprocess blocks in the first sub-transport block and a sequence number (which may be referred to as a number) of each preprocess block of the first sub-transport block in the first transport block, the first sub-transport block is any sub-transport block in the F sub-transport blocks, and H is an integer greater than 0 and less than B.

In a possible implementation, the first field is used to obtain B fourth fields through decoding, the first transport block includes the B preprocess blocks, the B fourth fields are in one-to-one correspondence with the B preprocess blocks, and the B fourth fields indicate sub-transport blocks corresponding to the B preprocess blocks.

In a possible implementation, the transceiver module is further configured to receive first control information from a transmit end, where the first control information indicates a length of each of the F encoded sub-transport blocks. The processing module is specifically configured to obtain the first transport block through decoding based on the second transport block and the first control information.

In a possible implementation, the first information is information sent by the transmit end during transmission based on the second transport block. In other words, the first field is included in the information sent by the transmit end during the transmission based on the second transport block. Optionally, the first field is included in the second transport block.

In a possible implementation, the first control information further includes the first field, the second transport block does not include the first field, the first field includes the F third fields, the first sub-transport block in the F sub-transport blocks includes the H preprocess blocks, the F third fields are in one-to-one correspondence with the F sub-transport blocks, the third field that is in the F third fields and that corresponds to the first sub-transport block indicates the quantity of preprocess blocks in the first sub-transport block and the sequence number of each preprocess block of the first sub-transport block in the first transport block, the first sub-transport block is any sub-transport block in the F sub-transport blocks, and H is an integer greater than 0 and less than B.

In a possible implementation, the transceiver module is further configured to send first retransmission information, where the first retransmission information indicates to retransmit a first code block group in the first sub-transport block, the first sub-transport block is one of the F encoded sub-transport blocks, and the first sub-transport block includes a plurality of code block groups.

For technical effect achieved by the possible implementations of the fourth aspect, refer to descriptions of technical effect of the second aspect or the possible implementations of the second aspect.

According to a fifth aspect, an embodiment of this application provides another communication apparatus. The communication apparatus includes a processor, the processor is coupled to a memory, and the memory is configured to store a program or instructions. When the program or the instructions are executed by the processor, the method according to any possible implementation of the first aspect and the second aspect is performed.

In this embodiment of this application, in a process of performing the method, a process of sending information (or a signal) in the method may be understood as a process of outputting information based on instructions of the processor. When outputting the information, the processor outputs the information to a transceiver, so that the transceiver transmits the information. After the information is output by the processor, other processing may further need to be performed on the information before the information reaches the transceiver. Similarly, when the processor receives input information, the transceiver receives the information, and inputs the information into the processor. Further, after the transceiver receives the information, other processing may need to be performed on the information before the information is input into the processor.

Operations such as sending and/or receiving related to the processor may be generally understood as outputting based on instructions of the processor unless otherwise specified or if the operations do not conflict with actual functions or internal logic of the operations in related descriptions.

In an implementation process, the processor may be a processor specially configured to perform these methods, or a processor, for example, a general-purpose processor, that executes computer instructions in the memory to perform these methods. For example, the processor may be further configured to execute a program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located in the communication apparatus.

In a possible implementation, the processor and the memory may be further integrated into one component, that is, the processor and the memory may be further integrated together.

In a possible implementation, the communication apparatus further includes the transceiver. The transceiver is configured to receive a signal, send a signal, or the like.

According to a sixth aspect, this application provides another communication apparatus. The communication apparatus includes a processing circuit and an interface circuit. The interface circuit is configured to obtain data or output data. The processing circuit is configured to perform the corresponding method according to any possible implementation of the first aspect and the second aspect.

According to a seventh aspect, this application provides a computer-readable storage medium. The computer-readable storage medium stores a computer program, and the computer program includes program instructions. When the program instructions are executed, a computer is enabled to perform the method according to any possible implementation of the first aspect and the second aspect.

According to an eighth aspect, this application provides a computer program product. The computer program product includes a computer program, and the computer program includes program instructions. When the program instructions are executed, a computer is enabled to perform the method according to any possible implementation of the first aspect and the second aspect.

According to a ninth aspect, this application provides a communication system. The communication system includes the communication apparatus according to any one of the third aspect or the possible implementations of the third aspect or a communication apparatus that implements a function of a transmit end in embodiments of this application, and the communication apparatus according to any one of the fourth aspect or the possible implementations of the fourth aspect or a communication apparatus that implements a function of a receive end in embodiments of this application.

## BRIEF DESCRIPTION OF DRAWINGS

To describe technical solutions in embodiments of this application or in the background more clearly, the following describes accompanying drawings for describing embodiments of this application or the background.

FIG. 1 is a diagram of comparison between an SSCC procedure and a JSCC procedure according to an embodiment of this application;

FIG. 2 is an example of a wireless communication system according to an embodiment of this application;

FIG. 3 is a diagram of an encoding procedure according to an embodiment of this application;

FIG. 4 is a diagram of a preprocessing procedure according to an embodiment of this application;

FIG. 5 is a diagram of preprocessing according to an embodiment of this application;

FIG. 6 is a diagram of an encoding processing procedure according to an embodiment of this application;

FIG. 7 is a diagram of a JSCC procedure according to an embodiment of this application;

FIG. 8 is an example of an encoding procedure according to an embodiment of this application;

FIG. 9 is a flowchart of an encoding transmission method according to an embodiment of this application;

FIG. 10 is a diagram of obtaining a second transport block through encoding according to an embodiment of this application;

FIG. 11 is a flowchart of another encoding transmission method according to an embodiment of this application;

FIG. 12 is an example of first control information according to an embodiment of this application;

FIG. 13 is another example of first control information according to an embodiment of this application;

FIG. 14 is a diagram of CBG indication manners according to an embodiment of this application;

FIG. 15 is a flowchart of a method for determining a first TB value according to an embodiment of this application;

FIG. 16 is a flowchart of a decoding method according to an embodiment of this application;

FIG. 17 is a flowchart of another decoding method according to an embodiment of this application;

FIG. 18 is a diagram of data recovery according to an embodiment of this application;

FIG. 19 is a flowchart of another decoding method according to an embodiment of this application;

FIG. 20 is a diagram of a structure of a communication apparatus 2000 according to an embodiment of this application;

FIG. 21 is a diagram of a structure of another communication apparatus 210 according to an embodiment of this application; and

FIG. 22 is a diagram of a structure of another communication apparatus 220 according to an embodiment of this application.

## DESCRIPTION OF EMBODIMENTS

Terms "first", "second", and the like in the specification, claims, and accompanying drawings of this application are merely used to distinguish between different objects, and are not used to describe a specific order. In addition, terms "include" and "have" and any other variants thereof are intended to cover a non-exclusive inclusion. For example, a process, method, system, product, device, or the like that includes a series of steps or units is not limited to the listed steps or units, but optionally further includes an unlisted step, unit, or the like, or optionally further includes another inherent step or unit of the process, method, product, device, or the like.

"An embodiment" mentioned in the specification indicates that a particular characteristic, structure, or feature described with reference to this embodiment may be included in at least one embodiment of this application. The phrase appearing in various locations in the specification does not necessarily mean a same embodiment, and neither means an independent or alternative embodiment mutually exclusive with another embodiment. It may be explicitly and implicitly understood by a person skilled in the art that embodiments described in the specification may be combined with another embodiment.

Terms used in the following embodiments of this application are merely intended to describe specific embodiments, but are not intended to limit this application. "One", "a", "the", and "this" of singular expression forms used in the specification and the appended claims of this application are also intended to include plural expression forms, unless otherwise specified in the context clearly. It should be further understood that the term "and/or" used in this application refers to and includes any or all possible combinations of one or more listed items. For example, "A and/or B" may represent three cases: Only A exists, only B exists, and both A and B exist, where A and B may be singular or plural. The term "a plurality of" used in this application means two or more.

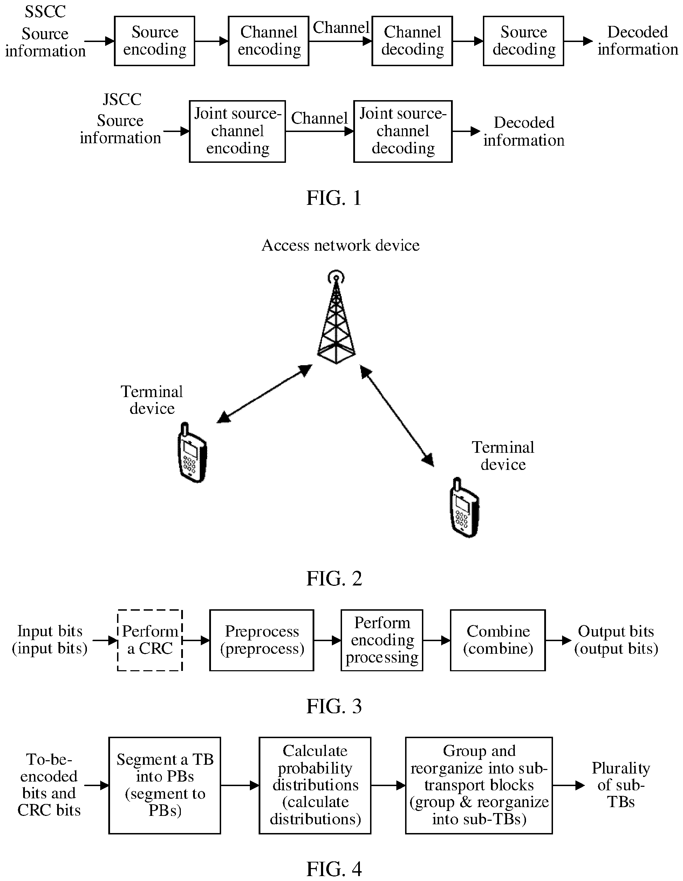

FIG. 1 is a diagram of comparison between an SSCC procedure and a JSCC procedure according to an embodiment of this application. As shown in FIG. 1, in the SSCC procedure, a transmit end performs the following operations: source encoding and channel encoding; and in the SSCC procedure, a receive end performs the following operations: channel decoding (which may be referred to as channel decoding) and source decoding. The transmit end requires two encoding modules. One encoding module is used for the source encoding, and the other encoding module is used for the channel encoding. The receive end requires two decoding modules (which may be referred to as decoding modules). One decoding module is used for the channel decoding, and the other decoding module is used for the source decoding. As shown in FIG. 1, in the JSCC procedure, the transmit end performs the following operation: joint source-channel encoding; and in the SSCC procedure, the receive end performs the following operation: joint source-channel decoding. The transmit end requires only one encoding module, and the encoding module is used for the joint source-channel encoding. The receive end requires only one decoding module, and the decoding module is used for the joint source-channel decoding. With reference to FIG. 1, in the SSCC procedure and the JSCC procedure, the transmit end first encodes source information, and then transmits encoded information to the receive end on a channel; and the receive end decodes the encoded information from the receive end, to obtain decoded information (that is, the source information).

Compared with SSCC, JSCC can use sparsity of a source bit stream to implement both compression and channel protection operations on a source. To implement JSCC, an encoding and decoding solution is as follows: The transmit end punctures a system bit, and completes compression and channel protection on the system bit through puncturing. The receive end completes, by using a probability distribution of 0s or 1s of source bits, reconstruction of soft information corresponding to the punctured system bit, to implement successful decoding. In this application, the system bit is an original information bit output through encoding. In this application, the probability distribution of 0s or 1s of the source bits is a probability distribution of 0s of the source bits and/or a probability distribution of 1s of the source bits. For different source probability distributions, the transmit end needs to adjust a code rate of an original channel code, to match different compression rates and channel protection effect. In an optional implementation, a channel code is directly used to implement a function of JSCC (where a specific operation is to perform system bit puncturing and rate matching on the channel code). Therefore, before a system bit is punctured and rate matching is performed to adjust a code rate, the code is referred to as an original channel code. The channel code may be a low density parity check (low density parity check, LDPC) code, a polar (polar) code, or the like.

In this encoding and decoding solution, the transmit end needs to send signaling to notify the receive end of a current source probability distribution of each code block (code block, CB). This increases signaling overheads and is incompatible with an existing protocol. If a function of separately indicating source probability distribution information of each CB is directly added to the existing protocol, adjacent CBs may be encoded by using different code rates because the CBs have different probability distributions. Consequently, lengths of the adjacent CBs before and after encoding cannot be aligned, and it is difficult to implement encoding and decoding. It should be understood that the foregoing encoding and decoding solution is merely an example of an encoding and decoding solution that can implement compression on a source (that is, to-be-encoded bits). In a current encoding and decoding solution that can implement compression on a source, a common problem is that encoding and decoding difficulty is great. For the problem that the encoding and decoding difficulty is great in the encoding and decoding solution that can implement compression on a source, this application provides a new encoding and decoding solution. According to the encoding and decoding solution provided in this application, encoding and decoding difficulty can be reduced and signaling overheads can be reduced while implementing compression on a source.

The following first describes a communication system to which the encoding and decoding solution provided in this application is applicable.

The encoding and decoding solution provided in this application may be applicable to a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, a future 6th generation (6th generation, 6G) communication system, and the like. Certainly, the encoding and decoding solution provided in this application may be further applicable to another possible communication system, for example, may be applied to an internet of things (internet of things, IoT) network or a wireless local area network system supporting 802.11 series protocols, or may be applied to a wireless personal area network system based on ultra-wideband UWB, or may be applied to a sensing (sensing) system, or may be applied to an internet of vehicles (vehicle to X, V2X) system, a machine type communication (machine type communication, MTC) system, a machine-to-machine information exchange (long term evolution-machine, LTE-M) system, a machine to machine (machine to machine, M2M) communication system, a vehicle to vehicle (vehicle to vehicle, V2V) communication system, a vehicle-to-vehicle information exchange (long term evolution-vehicle, LTE-V) system, a satellite communication system, or the like. The foregoing communication systems applicable to this application are merely examples for description, and the communication systems applicable to this application are not limited thereto. This is uniformly described herein, and details are not described below again.

FIG. 2 is an example of a wireless communication system according to an embodiment of this application. As shown in FIG. 2, the communication system includes: one or more terminal devices, where in FIG. 2, only two terminal devices are used as an example; and one or more access network devices (for example, a base station) that can provide a communication service for the terminal device, where in FIG. 2, only one access network device is used as an example. In some embodiments, the wireless communication system may include cells, each cell includes one or more access network devices, and the access network device provides a communication service for a plurality of terminal devices. The wireless communication system may also perform point-to-point communication. For example, a plurality of terminal devices communicate with each other. Optionally, a transmit end is one of the terminal device and the access network device, and a receive end is the other one of the terminal device and the access network device. In other words, when the transmit end is the terminal device, the receive end is the access network device. When the transmit end is the access network device, the receive end is the terminal device. Alternatively, both the transmit end and the receive end are terminal devices or access network devices.

The terminal device is a device that has a wireless transceiver function. The terminal device may communicate with one or more core network (core network, CN) devices (or referred to as core devices) through an access network device (or referred to as an access device) in a radio access network (radio access network, RAN). The terminal device may be deployed on land, where the deployment includes indoor or outdoor, and handheld or vehicle-mounted deployment, may be deployed on water (for example, on a ship), or may be deployed in air (for example, on a plane, a balloon, or a satellite). In embodiments of this application, the terminal device may also be referred to as user equipment (user equipment, UE), and may be a mobile phone (mobile phone), a mobile station (mobile station, MS), a tablet computer (pad), a computer with the wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal device, an uncrewed aerial vehicle, or the like. The terminal device may include various handheld devices, vehicle-mounted devices, wearable devices, or computing devices that have a wireless communication function, or other processing devices connected to wireless modems. Optionally, the terminal device may be a handheld device (handset) with the wireless communication function, a terminal device in an internet of things or an internet of vehicles, a terminal device of any form in 5G and a communication system evolved after 5G, or the like. This is not limited in this application.

The access network device may be any device that has the wireless transceiver function and that can communicate with the terminal device, for example, a radio access network (radio access network, RAN) node that connects the terminal device to a wireless network. Currently, some examples of the RAN node include a macro base station, a micro base station (also referred to as a small cell), a relay station, an access point, a gNB, a transmission reception point (transmission reception point, TRP), an evolved NodeB (evolved NodeB, eNB), a radio network controller (radio network controller, RNC), a home base station (for example, a home evolved NodeB, or a home NodeB, HNB), a baseband unit (baseband unit, BBU), a Wi-Fi access point (access point, AP), an integrated access and backhaul (integrated access and backhaul, IAB) node, a satellite, an uncrewed aerial vehicle, and the like.

For ease of understanding of the encoding and decoding solution provided in this application, the following describes an encoding procedure in the encoding and decoding solution provided in this application with reference to the accompanying drawings.

FIG. 3 is a diagram of an encoding procedure according to an embodiment of this application. In the encoding procedure shown in FIG. 3, a transmit end sequentially performs the following operations: performing a cyclic redundancy check (cyclic redundancy check, CRC), preprocessing (preprocessing), performing encoding processing, and performing a combination (combination) operation. The CRC may mean that the transmit end performs a cyclic redundancy check on information bits (namely, input bits), to obtain CRC bits corresponding to the information bits. Alternatively, the CRC in FIG. 3 may mean that the transmit end performs a CRC on information bits, to obtain to-be-encoded bits. The to-be-encoded bits include the information bits and CRC bits corresponding to the information bits. The to-be-encoded bits may include a transport block (transport block, TB). A manner in which the transmit end performs the CRC on the information bits is not limited in this application. The CRC in the encoding procedure shown in FIG. 3 may be replaced or added with another check, for example, a parity check (parity check, PC). Preprocessing may be grouping and reorganizing the to-be-encoded bits to obtain F sub-transport blocks (sub-TBs) and control information. Any sub-transport block includes at least one preprocess block (preprocess block, PB), probability distributions of all preprocess blocks included in the any sub-transport block belong to a same probability distribution range, probability distributions of preprocess blocks included in at least two of the F sub-transport blocks belong to different probability distribution ranges, and F is an integer greater than 1. The control information is used to obtain the to-be-encoded bits through decoding based on the F sub-transport blocks. The to-be-encoded bits may include the information bits, and may further include the CRC bits, parity check bits, and/or the like that correspond to the information bits. Optionally, the control information includes a length of each sub-transport block and a group number of each PB. The length of each sub-transport block may be a quantity of bits or a byte length of the sub-transport block, or may be a quantity of PBs in each sub-transport block (where a length of padding 0 or 1 for a last PB is calculated based on a TB length and a PB length). Content related to the group number of the PB is described below. An objective of performing preprocessing by the transmit end is to obtain a plurality of sub-transport blocks and the control information based on the to-be-encoded bits. An input of the preprocessing is the to-be-encoded bits, and an output is the F sub-transport blocks and the control information. The encoding processing in FIG. 3 may be separately encoding the F sub-transport blocks obtained through preprocessing, and at least two of F encoded sub-transport blocks correspond to different code rates. Optionally, when encoding different sub-transport blocks, the transmit end uses different coding matrices and/or MCSs. In other words, the transmit end may use different coding schemes for the different sub-transport blocks. An input of the encoding processing is the F sub-transport blocks, and an output is the F encoded sub-transport blocks. The combination operation in FIG. 3 may be combining (or concatenating, integrating, or the like) the F encoded sub-transport blocks into one encoded TB. An input of the combination operation is the F encoded sub-transport blocks, and an output is the encoded TB.

FIG. 4 is a diagram of a preprocessing procedure according to an embodiment of this application. As shown in FIG. 4, the preprocessing procedure includes the following operations: segmenting a TB into PBs (segmenting to PBs), calculating probability distributions (calculating distributions), and grouping and reorganizing into sub-transport blocks (grouping & reorganizing into sub-TBs). An input of the preprocessing procedure is to-be-encoded bits, and an output is a plurality of sub-TBs.

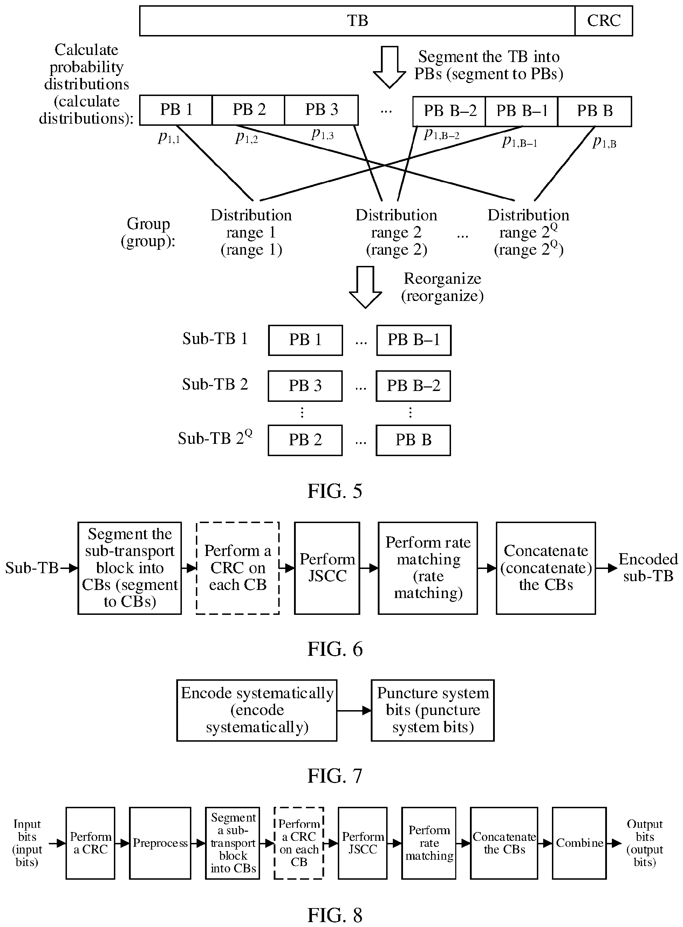

The segmenting a TB into PBs may be dividing the to-be-encoded bits into a plurality of PBs whose lengths are $N_S$. $N_S$ may be hundreds to thousands of bits (bits), and is not directly related to a length of a CB. $N_S$ may be negotiated in advance by a transmit end and a receive end, or may be directly specified in a protocol. An example of segmenting the TB into the PBs by the transmit end is as follows: dividing the to-be-encoded bits into B PBs based on a preconfigured or predefined length (that is, $N_S$) of the PB, and $B = \lceil (A + L)/N_s \rceil$ (where $\lceil \cdot \rceil$ indicates a rounding up operation) is satisfied. A last PB may need to be padded with 0 or 1. A quantity of padded bits is $[BN_S-(A+L)]$, A represents a quantity of information bits, and L represents a quantity of CRC bits corresponding to the information bits. FIG. 5 is a diagram of preprocessing according to an embodiment of this application. As shown in FIG. 5, a TB represents information bits, CRC represents CRC bits corresponding to the information bits, and a PB 1, a PB 2, a PB 3, ..., a PB B-1, and a PB B represent B PBs obtained by a transmit end by segmenting the TB into PBs. The PB 1, ..., and the PB B-1 belong to a range 1, the PB 3, ..., and a PB B-2 belong to a range 2, and the PB 2, ..., and the PB B belong to a range $2^Q$. A sub-transport block 1 (that is, the sub-TB 1) includes all PBs belonging to the range 1, a sub-transport block 2 (that is, the sub-TB 2) includes all PBs belonging to the range 2, ..., and a sub-transport block $2^Q$ (that is, the sub-TB $2^Q$) includes all PBs belonging to the range $2^Q$. The sub-TB 1, the sub-TB 2, ..., and the sub-TB $2^Q$ represent $2^Q$ sub-transport blocks, and the range 1, the range 2, ..., and the range $2^Q$ represent $2^Q$ probability distribution ranges. With reference to FIG. 5, the transmit end may use to-be-encoded bits, namely, the information bits and the CRC bits corresponding to the information bits, as a whole; and divide, based on an order of the bits, the to-be-encoded bits into a plurality of PBs whose lengths are $N_S$. For example, a 1st PB includes a 1st bit to an $N_S$th bit, a 2nd PB includes an $(N_S+1)$th bit to a $(2N_S)$th bit, and the rest may be deduced by analogy.

The calculating probability distributions may be separately calculating a probability distribution of 0s or 1s of each PB, that is, $p_{0,1}$, ..., and $p_{0,B}$ or $p_{1,1}$, ..., and $p_{1,B}$. $p_{0,1}$ represents a probability distribution of 0s of a 1st PB (namely, a PB 1), and $p_{0,B}$ represents a probability distribution of 0s of a Bth PB (namely, a PB B). With reference to FIG. 5, $p_{1,1}$ represents a probability distribution of 1s of the 1st PB (namely, the PB 1), $p_{1,2}$ represents a probability distribution of 1s of the 2nd PB (namely, the PB 2), ..., and $p_{1,B}$ represents a probability distribution of 1s of a Bth PB (namely, the PB B).

The grouping and reorganizing into sub-transport blocks may be: first determining, based on a ratio of 0s or 1s of each PB, a probability distribution range to which each PB belongs, where for example, with reference to FIG. 5, the PB 1 belongs to the range 1, and the PB 2 belongs to the range $2^Q$; and then reorganizing the B PBs based on probability distribution ranges to which the B PBs belong, to obtain F sub-transport blocks, for example, the sub-TB 1, the sub-TB 2, ..., and the sub-TB $2^Q$ shown in FIG. 5. The determining a probability distribution range to which each PB belongs may be understood as determining a group of each PB. In other words, an operation of determining the probability distribution range to which each PB belongs may be understood as an operation of grouping each PB. Optionally, the transmit end preconfigures or predefines the following $2^Q$ probability distribution ranges:

$$[0, P_1], (P_1, P_2], \dots, \left(P_{2^Q-2}, P_{2^Q-1}\right], \text{and } \left(P_{2^Q-1}, 1\right].$$

Q is an integer greater than 0. The transmit end may determine, based on the probability distribution of 0s or 1s of each PB, a specific probability distribution range that is in the $2^Q$ probability distribution ranges and to which each PB belongs. Optionally, after calculating a probability distribution (that is, $p_{1,1}$, ..., and $p_{1,B}$) of 1s of each PB, the transmit end performs matching on a specific value of the probability distribution of 1s of each PB and the preset $2^Q$ probability distribution ranges, in other words, determines a specific probability distribution range that is in the $2^Q$ probability distribution ranges and to which the probability range of each PB belongs. For example, the PB 1 corresponds to (belongs to) the range 1, the PB 2 corresponds to the range $2^Q$, the PB 3 corresponds to the range (range) 2, the PB B-2 corresponds to the range 2, the PB B-1 corresponds to the range 1, and the PB B corresponds to the range $2^Q$. Q may be negotiated in advance by the transmit end and the receive end (or may be modified by using a signaling indication). In other words, the $2^Q$ probability distribution ranges may be negotiated in advance by the transmit end and the receive end, or may be directly specified in the protocol. In consideration of control of protocol overheads and implementation complexity, a value of Q usually does not exceed six bits. The $2^Q$ probability distribution ranges may be equal intervals (in other words, interval lengths of any two probability distribution ranges are equal), or may be unequal intervals. For example, the probability distribution ranges may be obtained through division based on information entropies (where the information entropy=-$P*\log_2(1/P)+(1-P)*\log_2(1/(1-P))$) corresponding to the probability distributions. Equal information entropy intervals are mapped back to unequal probability distribution intervals. With reference to FIG. 5, the range 1 represents $[0, P_1]$, the range 2 represents $(P_1, P_2]$, ..., and the range $2^Q$ represents $(P_{2Q-1}, 1]$. The PB 1, ..., and the PB B-1 belong to $[0, P_1]$; the PB 3, ..., and the PB B-2 belong to $(P_1, P_2]$; and the PB 2, ..., and the PB B belong to $(P_{2Q-1}, 1]$. After determining the probability distribution range to which each PB belongs, the transmit end may generate (or produce) a group number of each PB. For example, a group number (which may be referred to as a PB group number) corresponding to a $b^{th}$ PB is denoted as $I_b$ ($1 \le b \le B$, and $1 \le I_b \le 2^Q$). There are a maximum of $2^Q$ PB group numbers. When there are $2^Q$ PB group numbers, each PB group number corresponds to one sub-transport block. When there are F PB group numbers, the F PB group numbers are in one-to-one correspondence with the F sub-transport blocks. F is less than or equal to $2^Q$. In the grouping example shown in FIG. 5, generated PB group numbers are (1, $2^Q$, 2, ..., 2, 1, $2^Q$).

That the transmit end reorganizes the B PBs based on the probability distribution ranges to which the B PBs belong may be as follows: The transmit end concatenates PBs belonging to a same probability distribution range based on an order of the PBs in the to-be-encoded bits, to obtain one sub-TB. With reference to FIG. 5, the transmit end sequentially concatenates the PB 1, ..., and the PB B-1 that belong to the range 1 to obtain the sub-TB 1; sequentially concatenates the PB 3, ..., and the PB B-2 that belong to the range 2 to obtain the sub-TB 2; and sequentially concatenates the PB 2, ..., and the PB B that belong to the range $2^Q$ to obtain the sub-TB $2^Q$. There are a total of $2^Q$ probability distribution ranges, and each probability distribution range corresponds to one sub-TB. Therefore, a maximum of $2^Q$ sub-TBs may be obtained through reorganization. F is less than or equal to $2^Q$. Optionally, after reorganizing the B PBs to obtain a plurality of sub-transport blocks, the transmit end may determine a length of each sub-transport block. It should be understood that, the group number of each PB and the length of each sub-transport block that are obtained by the transmit end may be considered as control information.

FIG. 6 is a diagram of an encoding processing procedure according to an embodiment of this application. As shown in FIG. 6, the encoding processing procedure includes the following operations: segmenting a sub-transport block into CBs (segmenting to CBs), performing a CRC on each CB, performing JSCC, performing rate matching (rate matching), and concatenating (concatenating) the CBs. It should be noted that the performing a CRC on each CB is optional, but not mandatory. In the encoding processing procedure shown in FIG. 6, the CRC performed on each CB may be replaced or added with another check. An input of the encoding processing procedure is the sub-TB, and an output is an encoded sub-TB. The segmenting a sub-transport block into CBs is segmenting each sub-transport block into a plurality of CBs. The segmenting a sub-transport block into CBs, the performing a CRC on each CB, the performing rate matching, and the concatenating the CBs shown in FIG. 6 may be all implemented by using a customary technical means in this field. Therefore, details are not described herein. The JSCC may be any type of joint source-channel coding, for example, JSCC using a channel code such as an LDPC code or a polar code. The JSCC shown in FIG. 6 may alternatively be replaced with SSCC. In this application, the JSCC is used as an example to describe the encoding and decoding solution provided in this application.

FIG. 7 is a diagram of a JSCC procedure according to an embodiment of this application. As shown in FIG. 7, the JSCC procedure includes: encoding systematically (encoding systematically), and puncturing system bits (puncturing system bits). A possible implementation of encoding systematically is as follows: performing an encoding operation by using a system polar code or a system LDPC code. A possible implementation of puncturing the system bits is as follows: puncturing all system bits, or puncturing some system bits in the front. In the JSCC procedure, channel protection on data can be implemented through systematical encoding, and a compression function is implemented by a transmit end by puncturing the system bits (other than CB CRC bits). For example, the transmit end punctures all system bits other than the CB CRC bits. For probability distributions of different sub-transport blocks, the transmit end may select different coding matrices or sequences.

FIG. 8 is an example of an encoding procedure according to an embodiment of this application. As shown in FIG. 8, the encoding procedure includes: performing a CRC, preprocessing, segmenting a sub-transport block into CBs, performing a CRC on each CB, performing JSCC, performing rate matching, concatenating the CBs, and performing a combination operation. For the operations in the procedure shown in FIG. 8, refer to the operations in FIG. 3 to FIG. 7.

The encoding and decoding solution provided in this application includes an encoding transmission method performed by a transmit end and a decoding method performed by a receive end. The following separately describes, with reference to the accompanying drawings, the encoding transmission method performed by the transmit end and the decoding method performed by the receive end that are provided in embodiments of this application.

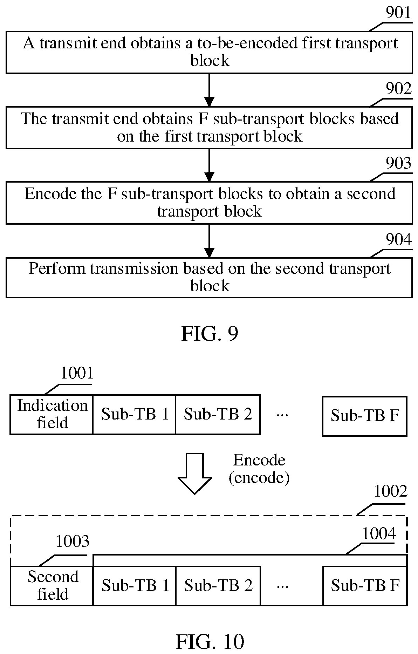

FIG. 9 is a flowchart of an encoding transmission method according to an embodiment of this application. As shown in FIG. 9, the method includes the following steps.

901: A transmit end obtains a to-be-encoded first transport block.

The first transport block may be a TB to be sent by the transmit end.

A possible implementation of step 901 is as follows: performing a CRC on information bits to obtain the first transport block, where the first transport block includes the information bits and CRC bits corresponding to the information bits. For example, the transmit end performs a CRC on one to-be-encoded TB (that is, information bits) to obtain L CRC bits; and adds the L CRC bits to the end of the to-be-encoded TB to obtain the first transport block.

Another possible implementation of step 901 is as follows: The transmit end determines a first TB value, where the first TB value indicates a quantity of bits or bytes included in one to-be-transmitted TB; and performs a CRC on bits that are with a quantity of the first TB value and that are obtained from a to-be-sent bit stream, to obtain the first transport block. The first TB value may be understood as a size of the to-be-transmitted TB. The transmit end may determine the first TB value based on a transmission resource allocated for current transmission. Herein, the current transmission refers to sending of the to-be-encoded first transport block. An implementation in which the transmit end determines the first TB value is further described below. In this implementation, the size of the to-be-transmitted TB is first determined, and then the to-be-encoded first transport block is obtained based on the size of the to-be-transmitted TB, so that resource utilization can be improved.

902: The transmit end obtains F sub-transport blocks based on the first transport block.

Any sub-transport block includes at least one preprocess block. Probability distributions of all preprocess blocks included in the any sub-transport block belong to a same probability distribution range. In this application, the probability distribution of the preprocess block is a probability distribution of 0s or 1s of the preprocess block. Probability distributions of preprocess blocks included in at least two of the F sub-transport blocks belong to different probability distribution ranges. F is an integer greater than 1. The first transport block may include the information bits (one TB) and the CRC bits corresponding to the information bits. Optionally, the transmit end generates a length of each sub-transport block and a group number of each PB, to subsequently generate corresponding control information.

A possible implementation of step 902 is as follows: dividing the first transport block into a plurality of PBs whose lengths are $N_S$, where a last PB may need to be padded with 0 or 1; calculating a probability distribution of 0s or 1s of each PB; determining, based on the probability distribution of 0s or 1s of each PB, a probability distribution range to which each PB belongs; and reorganizing the plurality of PBs based on probability distribution ranges to which the plurality of PBs belong, to obtain the F sub-transport blocks. For step 902, refer to the preprocessing shown in FIG. 5 and FIG. 6. The transmit end preprocesses the first transport block to obtain the F sub-transport blocks. An example in which the transmit end determines, based on the probability distribution of 0s or 1s of each PB, the probability distribution range to which each PB belongs is as follows: performing matching on a specific value of a probability distribution of 1s of each PB and the foregoing $2^Q$ probability distribution ranges, in other words, determining a specific probability distribution range that is in the $2^Q$ probability distribution ranges and to which a specific value of a probability distribution of each PB belongs (or in which the specific value of the probability distribution of each PB is located). With reference to FIG. 5, a PB 1 corresponds to (or belongs to) a range 1, a PB 2 corresponds to a range $2^Q$, a PB 3 corresponds to a range (range) 2, a PB B-2 corresponds to the range 2, a PB B-1 corresponds to the range 1, and a PB B corresponds to the range $2^Q$. An example of reorganizing the plurality of PBs based on the probability distribution ranges to which the plurality of PBs belong, to obtain the F sub-transport blocks is as follows: The transmit end concatenates PBs belonging to a same probability distribution range based on an order of the PBs in to-be-encoded bits, to obtain one sub-TB. With reference to FIG. 5, the transmit end sequentially concatenates the PB 1, ..., and the PB B-1 that belong to the range 1 to obtain a sub-TB 1; sequentially concatenates the PB 3, ..., and the PB B-2 that belong to the range 2 to obtain a sub-TB 2; and sequentially concatenates the PB 2, ..., and the PB B that belong to the range $2^Q$ to obtain a sub-TB $2^Q$.

903: Encode the F sub-transport blocks to obtain a second transport block.

The second transport block includes F encoded sub-transport blocks. At least two of the F encoded sub-transport blocks correspond to different code rates. The F encoded sub-transport blocks are obtained by encoding the F sub-transport blocks. Optionally, the transmit end separately encodes the F sub-transport blocks to obtain the F encoded sub-transport blocks, where at least two of the F sub-transport blocks correspond to different coding matrices. Optionally, CBs in a same sub-transport block may match a same MCS for encoding. In other words, the transmit end may perform encoding processing on the CBs in the same sub-transport block by using the same MCS. For step 903, refer to the encoding processing shown in FIG. 3 and FIG. 6. For example, the transmit end determines, based on a probability distribution and a channel status of each sub-transport block, an MCS corresponding to each sub-transport block. For example, a mapping relationship between a probability distribution and a channel status of a sub-transport block and an MCS may be implemented by using a two-dimensional MCS mapping table that is constructed in advance, to obtain that code rates corresponding to a sub-TB 1 to a sub-TB F are respectively $R_1$ to $R_F$, and quantities of bits corresponding to modulation orders are $M_1$ to $M_F$. In other words, the transmit end determines, based on the constructed two-dimensional MCS mapping table, a code rate and a modulation order, that is, the MCS, that correspond to the probability distribution and the channel status of each sub-transport block. Assuming that lengths of the sub-TBs are $A_1$ to $A_F$, symbol lengths obtained after encoding and modulation are respectively $\dfrac{A_1}{R_1 M_1}$ to $\dfrac{A_F}{R_F M_F}$. It should be noted that, symbol length obtained after encoding and modulation+symbol length occupied by UCI/DCI≤transmission resource, for example,

$$\sum_{i=1}^{F} \frac{A_i}{R_i M_i} + \text{symbol}$$ length occupied by the UCI/DCI≤transmission resource, where $\frac{A_i}{R_i M_i}$ represents a symbol length of a sub-TB i that is obtained after encoding and modulation of the sub-TB i. In other words, a sum of the symbol length obtained after encoding and modulation and the symbol length occupied by the UCI/DCI is less than the transmission resource.

A possible implementation of step 903 is as follows: The transmit end separately encodes the F sub-transport blocks to obtain the F encoded sub-transport blocks; and concatenates the encoded sub-transport blocks based on an order of probability distribution ranges to which the encoded sub-transport blocks belong, to obtain the second transport block. In this implementation, the encoded sub-transport blocks in the second transport block can be arranged based on the probability distribution ranges corresponding to the encoded sub-transport blocks.

A possible implementation of step 903 is as follows: generating an indication field; encoding the indication field to obtain a first field; separately encoding, by the transmit end, the F sub-transport blocks to obtain the F encoded sub-transport blocks; concatenating the encoded sub-transport blocks based on an order of probability distribution ranges to which the encoded sub-transport blocks belong, to obtain a third transport block; and concatenating the first field before the third transport block, to obtain the second transport block. The first field indicates a correspondence between the F sub-transport blocks and a bit stream in the first transport block, and/or indicates a probability distribution range to which a preprocess block included in each of the F sub-transport blocks belongs. A manner in which the transmit end generates the indication field and a format of the indication field are described in detail below. The transmit end may encode different sub-transport blocks in a same manner, and the transmit end may separately perform channel encoding on the indication field. In this implementation, the second transport block includes the first field and the F encoded sub-transport blocks, so that signaling overheads can be reduced.

An example in which the transmit end encodes the sub-transport block 1 (that is, the sub-TB 1) is as follows: segmenting the sub-TB 1 into a plurality of CBs; performing a CRC on each CB, in other words, performing a CRC on each CB; then performing JSCC and rate matching operations on CBs obtained after CRC operations; and finally concatenating CBs obtained after the rate matching operations, to obtain an encoded sub-TB 1. Before segmenting the sub-TB 1 into the plurality of CBs, the transmit end needs to first calculate a CB size. The transmit end may calculate the CB size in the following manner: determining a maximum CB size $K_{cb}$ based on a probability distribution of the sub-TB 1; calculating a quantity C of CBs to be obtained through segmentation from the sub-TB 1, where $C = \lceil \text{sub-TB length}/K_{cb} \rceil$; and calculating the CB size K based on the quantity C of CBs to be obtained through segmentation from the sub-TB 1. K and C need to satisfy: $K \times C \geq$ length of the sub-TB 1. When $K \times C$ is not equal to the length of the sub-TB 1, a 0-padding operation needs to be performed (where a 0 may be padded at the end, or a 0 may be padded at the beginning). It is denoted that K'= [sub-TB length/C]. In this case, a quantity of valid information bits in each CB is K' or K'-1, and a corresponding quantity of padded 0s is K-K' or K-K'+1. For example, quantities of valid information bits of first (K'*C-sub-TB length) CBs each are K', and a quantity of valid information bits of a subsequent CB is K'-1. A possible manner of determining the maximum CB size $K_{cb}$ based on the probability distribution of the sub-TB 1 is as follows: When LDPC JSCC is used, determining an LDPC matrix structure based on the probability distribution of the sub-TB 1, to obtain a maximum CB size $K_{cb}$ corresponding to the LDPC matrix. Another possible manner of determining the maximum CB size $K_{cb}$ based on the probability distribution of the sub-TB 1 is as follows: When polar JSCC is used, determining a code rate based on a channel status and the probability distribution of the sub-TB 1; and determining a mother code length based on the length and the code rate of the sub-TB 1, and then obtaining a corresponding maximum CB size $K_{cb}$. Optionally, the transmit end determines an information entropy value H based on the probability distribution of the sub-TB 1, determines a channel code rate $R_{CC}$ (which may be determined based on a preset MCS mapping table) based on the channel status (for example, a signal-to-noise ratio), and determines a JSCC code rate R based on H and $R_{CC}$, where $R = H * R_{CC}$. Optionally, the transmit end may design a JSCC MCS mapping table in advance. In the mapping table, a group of a JSCC code rate and a modulation order is jointly determined based on a probability distribution ($p_1$) and a channel status (for example, a signal-to-noise ratio). A possible manner of calculating the CB size K based on the quantity C of CBs to be obtained through segmentation from the sub-TB 1 is as follows: for a protograph LDPC or a code with a specific structure, jointly determining the CB size K based on [sub-TB length/C], a base graph size, a lifting coefficient (lifting size), and the like; and for a code without a specific structure constraint, determining $K = \lceil \text{sub-TB length}/C/K_0 \rceil \times K_0$, where $K_0$ represents a quantity of bits in a minimum unit of each CB. For example, when the minimum unit is a byte, $K_0 = 8$. For example, the base graph size is $N_0$, and the lifting coefficient is Z. In this case, a value of K needs to be aligned with the base graph size $N_0$, where $K = \lceil \text{sub-TB length}/C/N_0 \rceil \times N_0$.

Another possible implementation of step 903 is as follows: generating an indication field; concatenating the indication field before the F sub-transport blocks, where the F sub-transport blocks are arranged based on probability distribution ranges to which the F sub-transport blocks belong, that is, the sub-TB 1 to the sub-TB F; and separately performing channel encoding on the indication field by considering the indication field as a sub-TB 0, and separately encoding the F sub-transport blocks, to obtain the second transport block. An encoded indication field is a first field in the second transport block. A total length of bits obtained after the indication field and the F sub-transport blocks (that is, the sub-TB 0 to the sub-TB F) are encoded does not exceed a resource allocated for transmission, for example, a length of a physical uplink shared channel (physical uplink shared channel, PUSCH) resource minus a length of a resource used for uplink control information (uplink control information, UCI) multiplexing transmission, or a length of a physical downlink shared channel (physical downlink shared channel, PDSCH) resource minus a length of a resource used for downlink control information (downlink control information, DCI) multiplexing transmission. In this implementation, the second transport block includes the first field and the F encoded sub-transport blocks, so that signaling overheads can be reduced.

FIG. 10 is a diagram of obtaining a second transport block through encoding according to an embodiment of this application. As shown in FIG. 10, 1001 represents an indication field; a sub-TB 1, a sub-TB 2, ..., and a sub-TB F, that is, the sub-TB 1 to the sub-TB F, represent F sub-transport blocks; the indication field is concatenated before the sub-TB 1 as a sub-TB 0; 1002 represents the second transport block; 1003 represents a first field (that is, an encoded indication field); and 1004 represents an encoded sub-TB 1, an encoded sub-TB 2, ..., and an encoded sub-TB F, that is, F encoded sub-transport blocks. The indication field is used as the sub-TB 0, and channel encoding may be separately performed on the indication field.

The following describes, by using examples, several formats of the indication field and manners in which the transmit end generates the indication field.

Optionally, the indication field includes B second fields, the first transport block includes B preprocess blocks, and the B second fields indicate probability distribution ranges to which probability distributions of the B preprocess blocks belong. For example, the B preprocess blocks included in the first transport block are sequentially a PB 1, a PB 2, ..., and a PB B. A $1^{st}$ second field in the B second fields indicates a probability distribution range to which the PB 1 belongs, a $2^{nd}$ second field indicates a probability distribution range to which the PB 1 belongs, and by analogy, a $B^{th}$ second field indicates a probability distribution range to which the PB B belongs. Each second field may occupy Q bits. After determining the probability distribution range to which each PB belongs, the transmit end may record a group number (which may be subsequently referred to as a PB group number) of each PB. Each probability distribution range corresponds to one group number. For example, group numbers are 1 to $2^Q$. A group number of a PB may be considered as a number of a probability distribution range to which the PB belongs. For example, a group number corresponding to a $b^{th}$ PB is denoted as $I_b$ ($1 \leq b \leq B$ and $1 \leq I_b \leq 2^Q$). In a grouping example shown in FIG. 5, recorded PB group numbers are (1, $2^Q$, 2, ..., 2, 1, $2^Q$). The PB group numbers recorded by the transmit end may represent a correspondence between each PB in the first transport block and each PB in each sub-transport block. The transmit end may generate the indication field based on the recorded group number of each PB. For example, the first transport block is divided into the B PBs, and the indication field includes $I_1$, $I_2$, ..., and $I_B$, that is, the B second fields. $I_1$ represents a group number of a $1^{st}$ PB in the first transport block, $I_2$ represents a group number of a $2^{nd}$ PB in the first transport block, and $I_B$ represents a group number of a $B^{th}$ PB in the first transport block. Each of $I_1$, $I_2$, ..., and $I_B$ is represented by using Q bits. In this example, the indication field includes B*Q bits. It may be understood that after obtaining the PB group numbers recorded by the transmit end, a receive end may obtain the second transport block based on the PB group numbers and the F sub-transport blocks. In this implementation, the indication field occupies a fixed length, and may be used as a sub-TB 0 for transmission with another sub-TB, so that control resource overheads can be reduced.

Optionally, the indication field includes F third fields, a first sub-transport block in the F sub-transport blocks includes H preprocess blocks, the F third fields are in one-to-one correspondence with the F sub-transport blocks, a third field that is in the F third fields and that corresponds to the first sub-transport block indicates a quantity of preprocess blocks in the first sub-transport block and a sequence number (which may be referred to as a number) of each preprocess block of the first sub-transport block in the first transport block, the first sub-transport block is any sub-transport block in the F sub-transport blocks, and H is an integer greater than 0 and less than B. In this application, the sequence number and the number have a same meaning, and may be replaced with each other. After determining the probability distribution range to which each PB belongs, the transmit end may record all PB sequence numbers corresponding to each sub-transport block (that is, each sub-TB). The PB sequence number is a sequence number of a PB obtained through grouping from the first transport block. In the foregoing example, the first transport block is divided into the PB 1 to the PB B. Therefore, sequence numbers of the B PBs are separately 1 to B. A PB sequence number of the $1^{st}$ PB is 1, a PB sequence number of the $2^{nd}$ PB is 2, and a PB sequence number of the $B^{th}$ PB is B. Eight sub-TBs are used as an example, and a record format is shown as follows:

$$\left[ |I_1|, I_{1,1}, I_{1,2}, \ldots, I_{1,|I_1|}, |I_2|, I_{2,1}, I_{2,2}, \ldots, I_{2,|I_2|}, \ldots, |I_8|, I_{8,1}, I_{8,2}, \ldots, I_{8,|I_8|} \right].$$

Quantities ($|I_1|$, $|I_2|$, ..., and $|I_8|$) of PBs of the sub-TBs and corresponding PB sequence numbers ($I_{1,1}$, $I_{1,2}$, ..., $I_{1,|I_1|}$; $I_{2,1}$, $I_{2,2}$, ..., $I_{2,|I_2|}$; ...; and $I_{8,1}$, $I_{8,2}$, ..., $I_{8,|I_8|}$) are recorded. The transmit end may record only a PB sequence number corresponding to each sub-TB. $I_{1,1}$ represents a PB sequence number of a 1st PB in a sub-TB 1, $I_{1,2}$ represents a PB sequence number of a 2nd PB in the sub-TB 1, and $I_{1,|I_1|}$ represents a PB sequence number of an $|I_1|$th PB in the sub-TB 1. Because a length of the indication field is positively correlated with a quantity of sub-transport blocks, resource overheads can be reduced.

Optionally, the indication field includes B fourth fields (that is, bitmaps below), the first transport block includes B preprocess blocks, the B fourth fields are in one-to-one correspondence with the B preprocess blocks, and the B fourth fields indicate sub-transport blocks corresponding to the B preprocess blocks. In this application, that the first transport block includes B preprocess blocks may be understood as that the first transport block may be divided into the B preprocess blocks, and a sub-transport block corresponding to one preprocess block is a sub-transport block including the preprocess block. The transmit end may map a correspondence between the B PBs and sub-TBs by using B bitmaps (bitmaps). For example, when there are eight sub-TBs, each PB is represented by using eight bits. If a 1st PB corresponds to a 2nd sub-TB, a bitmap of the 1st PB is represented as 01000000. Finally, bitmaps of all the PBs are concatenated head-to-tail to obtain an overall mapping relationship, that is, the indication field. In this example, a bitmap of each PB is a fourth field. In this implementation, the indication field occupies a fixed length, and may be used as a sub-TB 0 for transmission with another sub-TB, so that control resource overheads are reduced.

904: Perform transmission based on the second transport block.

Performing transmission based on the second transport block may be sending information based on the second transport block. It may be understood that, if the second transport block includes the first field, the information sent by the transmit end during transmission based on the second transport block carries the first field. That the transmit end performs transmission based on the second transport block may be considered as that the transmit end sends first information carrying the first field. If the second transport block does not include the first field, the transmit end may further send the first information carrying the first field. The first information may be the following first control information, or may not be the following first control information. In other words, the first field may be carried in the following first control information, or may be carried in other control information.

A possible implementation of step 904 is as follows: generating a first signal based on the second transport block, and sending the first signal. The transmit end may perform signal processing based on the second transport block, to generate the first signal that carries (or bears) the second transport block. Transmitting a signal generated based on a transport block is a customary technical means in this field. Therefore, details are not described herein. The first signal is used by the receive end to obtain the second transport block through decoding. In other words, the first signal is used by the receive end to obtain the first transport block or the information bits (or data bits or the to-be-encoded bits) in the first transport block through decoding. Sending the first signal may be broadcasting the first signal, or may be sending the first signal to the receive end. Correspondingly, after receiving a second signal, the receive end may perform signal processing based on the second signal to obtain the second transport block, and then perform decoding based on the second transport block to obtain the first transport block or the information bits in the first transport block. The second signal is a signal received by the receive end after the first signal sent by the transmit end is transmitted on a channel. A manner in which the receive end performs decoding based on the second transport block is described below with reference to the accompanying drawings. Details are not described herein.

In this embodiment of this application, the probability distributions of all the preprocess blocks included in the any sub-transport block belong to the same probability distribution range. In this way, preprocess blocks in a same sub-transport block may match a same MCS for encoding and decoding operations. This facilitates code block alignment and hardware implementation at the transmit end and the receive end.

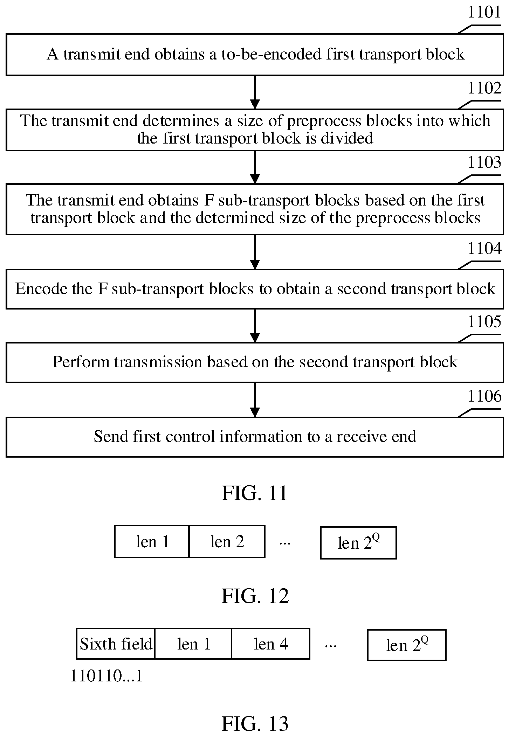

FIG. 11 is a flowchart of another encoding transmission method according to an embodiment of this application. A method procedure in FIG. 11 is a possible implementation of the method described in FIG. 9. In this implementation, a transmit end may adjust a quantity of groups and a PB size, to reduce signaling overheads for transmitting probability distributions. As shown in FIG. 11, the method includes the following steps.

1101: The transmit end obtains a to-be-encoded first transport block.

1102: The transmit end determines a size of preprocess blocks into which the first transport block is divided.

Optionally, a plurality of sizes of the preprocess block are preconfigured at the transmit end, and the transmit end selects any one of the plurality of sizes of the preprocess block. The transmit end may select the size of the preprocess block based on allocated transmission resources. When a small quantity of transmission resources are allocated, a small size of the preprocess block is selected. In this way, signaling overheads can be reduced. For example, the sizes of the preprocess block that are preconfigured at the transmit end include $N_1$, $N_2$, ..., and $N_S$, and any two of $N_1$, $N_2$, ..., and $N_S$ correspond to different quantities of bits. Optionally, the transmit end may determine, based on an actual requirement, the size of the preprocess blocks into which the first transport block is divided. In a possible implementation, the transmit end does not need to preconfigure the size of the preprocess block or does not need to use a preconfigured size of the preprocess block.

Optionally, the transmit end first determines the quantity of groups, that is, a quantity of the PBs into which the first transport block is divided, and then determines, based on the quantity of groups, the size of the preprocess blocks into which the first transport block is divided. For example, the transmit end determines to divide the first transport block into 100 PBs, and determines that the size of the preprocess blocks into which the first transport block is divided is $\left\lfloor \frac{A+L}{100} \right\rfloor$. $\left\lfloor \frac{A+L}{100} \right\rfloor$

represents performing rounding down on $\frac{A+L}{100}$. The quantity of groups may be preconfigured.

1103: The transmit end obtains F sub-transport blocks based on the first transport block and the determined size of the preprocess blocks.

For step 1103, refer to step 902. For example, the transmit end divides the first transport block into preprocess blocks whose sizes are $N_S$, in other words, the transmit end divides the first transport block into a plurality of PBs whose lengths are Ns, where a last PB may need to be padded with 0 or 1; calculates a probability distribution of 0s or 1s of each PB; determines, based on the probability distribution of 0s or 1s of each PB, a probability distribution range to which each PB belongs; and reorganizes the plurality of PBs based on probability distribution ranges to which the plurality of PBs belong, to obtain the F sub-transport blocks.

1104: Encode the F sub-transport blocks to obtain a second transport block.

For step 1104, refer to step 903.

1105: Perform transmission based on the second transport block.

For step 1105, refer to step 904.

1106: The transmit end sends first control information to a receive end.

The first control information indicates a length of each of F encoded sub-transport blocks. Alternatively, the first control information indicates a length of each encoded sub-transport block in the F sub-transport blocks. The transmit end may send the first control information by using UCI or DCI. In other words, the first control information is carried in the UCI or the DCI. A multiplexing operation may be performed on the DCI or the UCI that carries the first control information and corresponding data information. In other words, transmission of the DCI or the UCI that carries the first control information and transmission of the corresponding data information are completed on a shared channel (for example, a UL/DL-SCH). Multiplexing herein refers to data and extended multiplexing (data and control multiplexing) defined in a physical layer (PHY) protocol of 3GPP, and means that some control information and data of a current TB are concatenated head-to-tail, encoded, modulated, and sent out (where in this way, it is equivalent to that a same group of shared channel resources are multiplexed, and the group of shared channel resources may be uplink or downlink shared channel resources (UL-SCH or DL-SCH)). Both a first field and the first control information belong to control information. The first control information is separately sent, and the first field and data information (that is, the encoded sub-transport blocks) are sent together. Different levels of protection are performed on different control information, so that the allocated transmission resources can be fully utilized.

In a possible implementation, the transmit end sends the first control information to the receive end in a fixed-length manner. To be specific, $2^Q$ lengths carried in the first control information each are represented by using a fixed quantity of bits, and the $2^Q$ lengths correspond to $2^Q$ probability distribution ranges. For example, the first control information includes $2^Q$ fields, each field includes D bits, each field corresponds to one probability distribution range, each field represents a length of one sub-transport block, and D is an integer greater than 0. It should be noted that when a length represented by any field included in the first control information is 0, a sub-transport block corresponding to the any field is not present, in other words, no preprocess block belongs to a probability distribution range corresponding to the any field. FIG. 12 is an example of the first control information according to an embodiment of this application. As shown in FIG. 12, len 1, len 2, ..., and len $2^Q$ represent the $2^Q$ fields included in the first control information, len 1 represents a length of a sub-transport block corresponding to a $1^{st}$ probability distribution range in the $2^Q$ probability distribution ranges, len 2 represents a length of a sub-transport block corresponding to a $2^{nd}$ probability distribution range in the $2^Q$ probability distribution ranges, len $2^Q$ represents a length of a sub-transport block corresponding to a $(2^Q)^{th}$ probability distribution range in the $2^Q$ probability distribution ranges, and len 1, len 2, ..., and len $2^Q$ include a same quantity of bits. Probability distributions of all preprocess blocks included in a sub-transport block corresponding to a specific probability distribution range belong to the probability distribution range. When F is equal to $2^Q$, none of len 1, len 2, ..., and len $2^Q$ is 0, in other words, a sub-transport block corresponding to each field is present. When F is less than $2^Q$, at least one of len 1, len 2, ..., and len $2^Q$ is 0, in other words, a sub-transport block corresponding to at least one field is not present. In this implementation, the transmit end sends the first control information to the receive end in the fixed-length manner. Because a fixed byte is occupied, this implementation is easier to implement.

In a possible implementation, the transmit end sends the first control information to the receive end in a variable-length manner. The first control information may carry a fifth field and F sixth fields, the fifth field indicates whether a sub-transport block is present or is not present (in other words, whether a length is greater than 0 or is 0), the F sixth fields are in one-to-one correspondence with the F sub-transport blocks whose lengths are greater than 0, and each sixth field indicates a length of one sub-transport block corresponding to the sixth field. Quantities of bits included in the F sixth fields may be the same. For example, the fifth field is a binary sequence (or referred to as a binary indicator vector) including $2^Q$

bits. The $2^Q$ bits included in the binary sequence are in one-to-one correspondence with $2^Q$ probability distribution ranges. If a specific bit in the binary sequence is 0, it indicates that a sub-transport block corresponding to a probability distribution range corresponding to the bit is not present. If a specific bit in the binary sequence is 1, it indicates that a sub-transport block corresponding to a probability distribution range corresponding to the bit is present. Each sixth field indicates a length of one sub-transport block corresponding to the sixth field, and the sub-transport block corresponding to each sixth field is present. The transmit end determines probability distribution ranges to which B preprocess blocks belong. When no preprocess block belongs to a specific probability distribution range, a sub-transport block corresponding to the probability distribution range is not present. It should be understood that F may be less than $2^Q$, and F is a variable, that is, is not fixed. In other words, when the transmit end sends different data, quantities of obtained sub-transport blocks may be different. It should be understood that, from a perspective of a plurality of times of transmission, the first control information is sent in the variable-length manner. Therefore, F is not fixed. FIG. 13 is another example of the first control information according to an embodiment of this application. As shown in FIG. 13, 1301 represents the fifth field, 1302 represents the F sixth fields, len 1 represents a length of a sub-transport block corresponding to a 1st probability distribution range in the $2^Q$ probability distribution ranges, len 4 represents a length of a sub-transport block corresponding to a 4th probability distribution range in the $2^Q$ probability distribution ranges, and len $2^Q$ represents a length of a sub-transport block corresponding to a $(2^Q)^{th}$ probability distribution range in the $2^Q$ probability distribution ranges, and 110110... 1 is an example of the fifth field. In the example shown in FIG. 13, sub-transport blocks corresponding to a 2nd probability distribution range, a 3rd probability distribution range, a 5th probability distribution range, a 6th probability distribution range, and the like in the $2^Q$ probability distribution ranges are not present (in other words, lengths are 0). In this implementation, the transmit end sends the first control information in the variable-length manner. When a difference between F and $2^Q$ is large, signaling overheads can be reduced.

In a possible implementation, the first control information may further include the first field. Alternatively, the transmit end sends, to the receive end, second control information that carries the first field.

The transmit end may further perform the following operations: receiving first retransmission information, where the first retransmission information indicates to retransmit a first code block group in a first sub-transport block, the first sub-transport block is included in the F encoded sub-transport blocks, and any sub-transport block includes a plurality of code block groups; and performing retransmission based on the first retransmission information. Because performing retransmission by the transmit end based on retransmission information is a customary technical means in this field, details are not described herein. The first retransmission information may be understood as an indication of a code block group (code block group, CBG) during retransmission. Optionally, the first retransmission information includes a sub-transport block number and a CBG number, the sub-transport block number is a number of the first sub-transport block, and the CBG number is a number of the first code block group. The first retransmission information may further indicate, by using other information carried in the first retransmission information, to retransmit the first code block group in the first sub-transport block. This is not limited in this application.

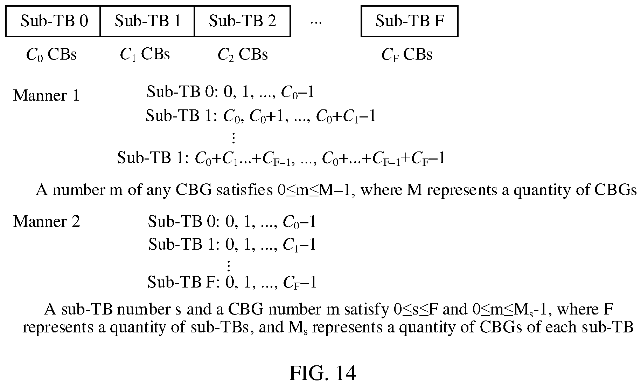

In this application, the indication of the CBG during retransmission may be implemented in the following two manners. There are two CBG indication manners. A manner 1 is to indicate an inter-sub-TB CBG, and a manner 2 is to indicate an intra-sub-TB CBG. FIG. 14 is a diagram of CBG indication manners according to an embodiment of this application. As shown in FIG. 14, a sub-TB 0 (namely, the first field) includes $C_0$ CBs, a sub-TB 1 includes $C_1$ CBs, a sub-TB 2 includes $C_2$ CBs, ..., and a sub-TB F includes $C_F$ CBs; and the second transport block includes C CBs in total. In the manner 1 shown in FIG. 14, a number m of any CBG satisfies $0 \leq m \leq M-1$, and M represents a quantity of CBGs. Numbers of CBs are consecutive, and numbers of CBGs are also consecutive. For example, a number of a 1st CB is 0, and a number of a last CB is C-1. In the manner 2 shown in FIG. 14, a sub-TB number s and a CBG number m satisfy $0 \leq s \leq F$ and $0 \leq m \leq M_s-1$, F represents a quantity of sub-TBs, and $M_s$ represents a quantity of CBGs of each sub-TB. Numbers of CBs belonging to a same sub-TB are consecutive, and numbers of CBs in different sub-TBs are independent. For example, a number of a 1st CB in each sub-TB is 0. Numbers of CBGs belonging to a same sub-TB are consecutive, and numbers of CBGs in different sub-TBs are independent. For example, a number of a 1st CBG in each sub-TB is 0.

**Inter-sub-TB** CBG: From the sub-TB 0 to the sub-TB F, CBs are uniformly numbered from 0 to C in sequence. $C = C_0 + ... + C_{F-1} + C_F$, $C_0$ indicates that the sub-TB 0 includes $C_0$ CBs, $C_{F-1}$ indicates that a sub-TB F-1 includes $C_{F-1}$ CBs, and $C_F$ indicates that the sub-TB F includes $C_F$ CBs.

If a maximum quantity of CBGs configured for each TB is N, the quantity of CBGs is M=min(N, C). It is denoted that $M_1 = \text{mod}(C, M)$, $K_1 = \left\lceil \dfrac{C}{M} \right\rceil$, and $K_2 = \left\lfloor \dfrac{C}{M} \right\rfloor$ (where $\lfloor \cdot \rfloor$ indicates a rounding down operation), to subsequently indicate a CBG range. If $M_1 > 0$, a CBG whose number m satisfies $0 \leq m \leq M_1-1$ includes an $(m*K_1+k)^{th}$ CB, where $0 \leq k \leq K_1-1$, and a CBG whose number m satisfies $M_1 \leq m \leq M-1$ includes an $(M_1*K_1+(m-M_1)*K_2+k)^{th}$ CB, where $0 \leq k \leq K_2-1$. For example, F=2, so that there are three sub-TBs 0 to 2 in total; each sub-TB includes two CBs, so that there are C=6 CBs in total; and the maximum quantity of CBGs is N=3, so that the quantity of CBGs is M=3. Further, $M_1=0$ and $K_1=K_2=2$ are obtained. Therefore, a CBG whose number is m includes an $(m*K_2+k)^{th}$ CB. If a CBG 0 is indicated, a flag 0 needs to be sent, to indicate a CB 0, a CB 1, and a CB 2. If a CBG 1 is indicated, a flag 1 needs to be sent, to indicate a CB 3, a CB 4, and a CB 5. In this scenario, only one bit is required to complete CBG indication (where 0 indicates the CBG 0, and 1 indicates the CBG 1). The first retransmission information may include a first flag, and the first flag indicates the first code block group in the first sub-transport block.

**Intra-sub-TB CBG:** Each CBG is represented by a sub-TB number s and a CBG number m, where $0 \leq s \leq F$. If a maximum quantity of CBGs configured for each sub-TB is N, the quantity of CBGs of each sub-TB is $M_s = \min(N, C_s)$.

It is denoted that $M_{s,1} = \text{mod}(C_s, M_s)$, $K_{s,1} = \left\lceil \dfrac{C_s}{M_s} \right\rceil$, and $K_{s,2} = \left\lfloor \dfrac{C_s}{M_s} \right\rfloor$. If $M_{s,1} > 0$, a CBG whose number m satisfies $0 \leq m \leq M_{s,1}-1$ includes an $(m*K_{s,1}+k)^{th}$ CB, where $0 \leq k \leq K_{s,1}-1$, and a CBG whose number m satisfies $M_{s,1} \leq m \leq M_s-1$ includes an $(M_{s,1}*K_{s,1}+(m-M_{s,1})*K_{s,2}+k)^{th}$ CB, where $0 \leq k \leq K_{s,2}-1$. For example, F=2, so that there are three sub-TBs 0 to 2 in total; each sub-TB includes six CBs; and the maximum quantity of CBGs is N=3, so that the quantity of CBGs of each sub-TB is $M_s=3$. Further, $M_{s,1}=0$ and $K_{s,1}=K_{s,2}=2$ are obtained. Therefore, a CBG whose number is m includes an $(m*K_2+k)^{th}$ CB. If a CBG 0 of the sub-TB 1 is indicated, s=1 and a flag 0 need to be sent, in other words, a CB 0, a CB 1, and a CB 2 of the sub-TB 1 are indicated. If a CBG 1 of a sub-TB 2 is indicated, s=2 and a flag 1 need to be sent, in other words, a CB 3, a CB 4, and a CB 5 of the sub-TB 2 are indicated. In this scenario, three bits are required to complete CBG indication (where the first two bits indicate sub-TB numbers 0 to 2; and the last bit indicates a CBG 0 when the bit is 0, and the last bit indicates a CBG 1 when the bit is 1).

In this embodiment of this application, the transmit end determines the size of the preprocess blocks into which the first transport block is divided, in other words, adjusts the quantity of groups and the PB size, to reduce the signaling overheads for transmitting the probability distributions.

Because the foregoing does not describe in detail an implementation of determining the first TB value (to be specific, a quantity of bits or bytes included in the to-be-transmitted TB), the following describes how to determine the first TB value with reference to the accompanying drawings.

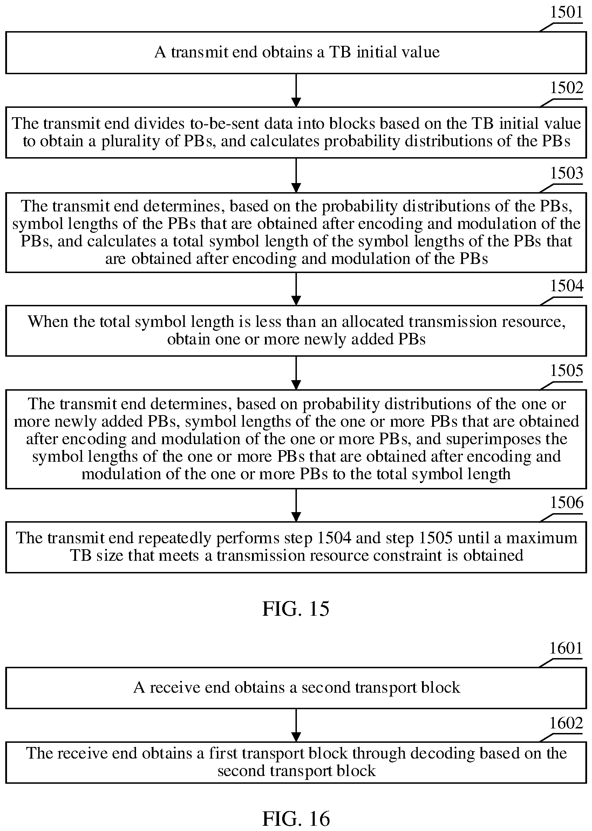

FIG. 15 is a flowchart of a method for determining a first TB value according to an embodiment of this application. As shown in FIG. 15, the method includes the following steps.

1501: A transmit end obtains a TB initial value.

A possible implementation of step 1501 is as follows: In a case of initial sending, a preset value is used as the TB initial value, where the preset value meets that a sum of a TB length and a TB CRC length is an integer multiple of a PB length. In a case of non-initial sending, a TB size of a previous round of transmission is used as the initial value. The TB initial value may be understood as an initial length of a TB.

1502: The transmit end divides to-be-sent data into blocks based on the TB initial value to obtain a plurality of PBs, and calculates probability distributions of the PBs.

The transmit end obtains the to-be-sent data from a to-be-sent bit stream based on the TB initial value. For example, the TB initial value is P bytes. The transmit end obtains P bytes from the to-be-sent bit stream, to obtain the to-be-sent data. P is an integer greater than 1.

For example, the TB initial value is A, the TB CRC length is L, and the PB length is Ns. The transmit end divides A+L bits into B PBs whose lengths are $N_S$, and $B = \lceil (A+L)/N_s \rceil$ (where $\lceil \cdot \rceil$ indicates a rounding up operation) is satisfied. A last PB may need to be padded with 0 or 1, and a quantity of padded 0s or 1s is [BNs-(A+L)].

1503: The transmit end determines, based on the probability distributions of the PBs, symbol lengths of the PBs that are obtained after encoding and modulation of the PBs, and calculates a total symbol length of the symbol lengths of the PBs that are obtained after encoding and modulation of the PBs.

The transmit end may determine, based on the foregoing two-dimensional MCS mapping table, a code rate and a quantity of bits corresponding to a modulation order that correspond to each PB. Assuming that a bit length of a PB i that is obtained before encoding and modulation of the PB i is $A_i$, a symbol length of the PB i that is obtained after encoding and modulation of the PB i is $\dfrac{A_i}{R_i M_i}$. $R_i$ and $M_i$ respectively represent a code rate and a quantity of bits corresponding to a modulation order that correspond to the PB i.

1504: When the total symbol length is less than an allocated transmission resource, obtain one or more newly added PBs.

That the total symbol length is less than an allocated transmission resource may be that a difference between the allocated transmission resource and a transmission resource occupied for sending the to-be-sent data is greater than a first threshold. The first threshold may be configured based on an actual requirement. This is not limited in this application. For example, the first threshold is 10%, 15%, or 20% of the allocated transmission resource. The one or more newly added PBs are not included in the to-be-sent data, and are included in the to-be-sent bit stream. A technical objective of step 1504 is to attempt to increase a size of the to-be-sent data. Alternatively, a technical objective of step 1504 is to attempt to add one or more PBs based on the to-be-sent data.

1505: The transmit end determines, based on probability distributions of the one or more newly added PBs, symbol lengths of the one or more PBs that are obtained after encoding and modulation of the one or more PBs, and superimposes the symbol lengths of the one or more PBs that are obtained after encoding and modulation of the one or more PBs to the total symbol length.

For example, the total symbol length calculated in step 1503 is S1, and a sum of the symbol lengths of the one or more PBs that are obtained after encoding and modulation of the one or more PBs is S2. After the symbol lengths of the one or more PBs that are obtained after encoding and modulation of the one or more PBs are superimposed to the total symbol length, the total symbol length changes to S1+S2.

1506: The transmit end repeatedly performs step 1504 and step 1505 until a maximum TB size that meets a transmission resource constraint is obtained.

When a transmission resource that needs to be occupied by a total symbol length obtained after superimposition is less than the allocated transmission resource, and an absolute value of a difference between the transmission resource that needs to be occupied by the total symbol length obtained after superimposition and the allocated transmission resource is less than the first threshold, the transmit end determines the maximum TB size that meets the transmission resource constraint.

For downlink transmission, the transmit end learns of a probability distribution and the transmission resource of the to-be-sent data, and therefore may obtain, by performing the method procedure in FIG. 15, the maximum TB size that meets the transmission resource constraint. For uplink transmission, the transmit end may learn, from a receive end (for example, a base station), a size of the allocated transmission resource, and obtain, by performing the method procedure in FIG. 15, the maximum TB size that meets the transmission resource constraint. When the transmit end performs uplink transmission, the transmit end may report the calculated maximum TB size to the receive end, or may report all sub-TB sizes, so that the receive end (for example, the base station) calculates a TB size through summation.

In this embodiment of this application, when an MCS mapping table (a relationship between a probability distribution & a channel status and an MCS) and the allocated transmission resource are given, the transmit end may obtain the maximum TB size that meets the transmission resource constraint, so that resource utilization can be improved.

The foregoing describes the encoding transmission method performed by the transmit end, and the following describes the decoding method performed by the receive end.

FIG. 16 is a flowchart of a decoding method according to an embodiment of this application. As shown in FIG. 16, the method includes the following steps.

1601: A receive end obtains a second transport block.

The second transport block includes F encoded sub-transport blocks. At least two of the F encoded sub-transport blocks correspond to different code rates. The F encoded sub-transport blocks are obtained by encoding F sub-transport blocks. Any sub-transport block includes at least one preprocess block, and probability distributions of all preprocess blocks included in the any sub-transport block belong to a same probability distribution range. Probability distributions of preprocess blocks included in at least two of the F sub-transport blocks belong to different probability distribution ranges. F is an integer greater than 1, and the F sub-transport blocks are obtained based on a first transport block. The second transport block is obtained by a transmit end based on the first transport block, and the first transport block includes unencoded data from the transmit end.

In a possible implementation, the second transport block further includes a first field, and the first field indicates a correspondence between the F sub-transport blocks and a bit stream in the first transport block and/or indicates a probability distribution range to which a preprocess block included in each of the F sub-transport blocks belongs.

1602: The receive end obtains the first transport block through decoding based on the second transport block.

Before performing step 1602, the receive end may receive first control information from the transmit end, where the first control information indicates a length of each of the F encoded sub-transport blocks. A possible implementation of step 1601 is as follows: obtaining the first transport block through decoding based on the second transport block and the first control information, where the second transport block includes the first field. Optionally, the first control information further carries the first field, and the second transport block may not include the first field. An implementation of step 1602 is subsequently described in detail.

Before performing step 1602, the receive end may receive first control information and second control information from the transmit end, where the first control information indicates a length of each of the F encoded sub-transport blocks, and the second control information indicates the correspondence between the F sub-transport blocks and the bit stream in the first transport block. A possible implementation of step 1601 is as follows: obtaining the first transport block through decoding based on the first control information, the second control information, and the second transport block.

In a possible implementation, the receive end sends first retransmission information to the transmit end, where the first retransmission information indicates the transmit end to retransmit a first code block group in a first sub-transport block, the first sub-transport block is included in the F encoded sub-transport blocks, and any sub-transport block includes a plurality of code block groups. In this implementation, retransmission of the first code block group in the first sub-transport block may be accurately indicated.

In this embodiment of this application, the probability distributions of all the preprocess blocks included in the any sub-transport block belong to the same probability distribution range. In this way, CBs in a same sub-transport block may match a same MCS for decoding operations. This facilitates code block alignment and hardware implementation at the receive end.

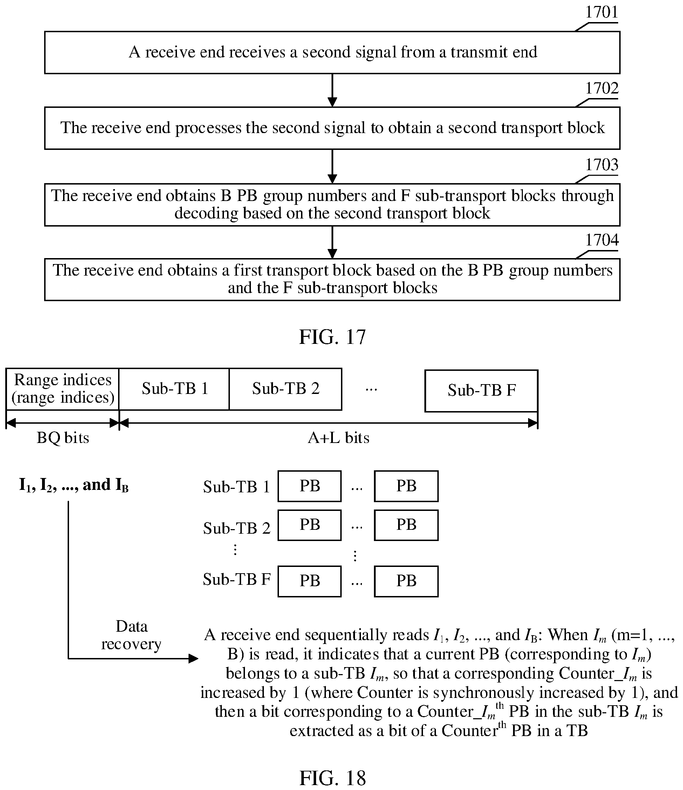

FIG. 17 is a flowchart of another decoding method according to an embodiment of this application. A method procedure in FIG. 17 is a possible implementation of the method described in FIG. 16. In this implementation, a transmit end can quickly and accurately perform reorganization based on PB group numbers and sub-transport blocks obtained through decoding, to obtain a TB sent by a transmit end, that is, a first transport block. As shown in FIG. 17, the method includes the following steps.

1701: The receive end receives a second signal from the transmit end.

The second signal is a signal received by the receive end after a first signal sent by the transmit end is transmitted on a channel. The first signal is a signal generated by the transmit end based on a second transport block. In other words, the first signal is a signal sent by the transmit end.

1702: The receive end processes the second signal to obtain the second transport block.

The second transport block includes F encoded sub-transport blocks, and the F encoded sub-transport blocks may be decoded to obtain F sub-transport blocks. That the receive end processes the second signal to obtain the second transport block may be implemented by using a customary technical means in this field, and details are not described herein.

In a possible implementation, a first field in the second transport block is obtained by encoding B PB group numbers, and the B PB group numbers are sequentially a PB group number of a 1st PB to a PB group number of a Bth PB in the first transport block. In other words, the transmit end divides the first transport block into B PBs, the B PBs are sequentially a PB 1, a PB 2, ..., and a PB B, and the B PB group numbers are sequentially group numbers of the PB 1, the PB 2, ..., and the PB B. The PB 1 represents the 1st PB in the first transport block, the PB 2 represents a 2nd PB in the first transport block, and the PB B represents the Bth PB in the first transport block.

In a possible implementation, a first field in the second transport block is obtained by encoding B fourth fields, the B fourth fields are in one-to-one correspondence with B PBs in the second transport block, and the B fourth fields indicate sub-transport blocks corresponding to the B PBs. Because each sub-transport block corresponds to one PB group number, a sub-transport block corresponding to a PB may be considered as a PB group number of the PB. A difference between the fourth field and the foregoing second field lies in that the second field is a binary sequence indicating a PB group number, and the fourth field is a bitmap indicating a PB group number. It should be understood that both the second field and the fourth field represent a group number of a PB in essence. It is assumed that a second field corresponding to a PB 1 is 0010, and the second field indicates that a group number of the PB 1 is 2; and a fourth field corresponding to the PB 1 is 01000000, and the fourth field indicates that the group number of the PB 1 is 2. The transmit end and the receive end may alternatively indicate a group number of a PB in another manner. This is not limited in this application.

1703: The receive end obtains the B PB group numbers and the F sub-transport blocks through decoding based on the second transport block.

A possible implementation of step 1703 is as follows: obtaining the B PB group numbers and the F sub-transport blocks through decoding based on first control information from the transmit end and the second transport block, where the second transport block includes the first field. The first control information indicates a length of each of the F encoded sub-transport blocks. The receive end may obtain the B PB group numbers through decoding based on the first field in the second transport block, that is, an indication field including B second fields (or the B fourth fields). For example, the receive end obtains BQ bits through decoding based on the first field, every Q bits represent one PB group number, and there are a total of B PB group numbers, that is, $I_1, I_2, ...,$ and $I_B$. $I_1, I_2, ...,$ and $I_B$ are sequentially the group numbers of the PB 1, the PB 2, ..., and the PB B. The receive end may obtain the F sub-transport blocks through decoding based on the F encoded sub-transport blocks. Any sub-transport block includes one or more PBs.

A possible implementation of step 1703 is as follows: obtaining the B PB group numbers and the F sub-transport blocks through decoding based on first control information from the transmit end and the second transport block. The first control information indicates a length of each of the F encoded sub-transport blocks. The first control information includes the B second fields, and the second transport block does not include the B second fields. Alternatively, the first control information includes the B fourth fields, and the second transport block does not include the B fourth fields. Before performing step 1703, the receive end may receive the first control information from the transmit end. The first control information may be carried in one piece of control signaling, or may be carried in two pieces of control signaling. For example, the first control information is carried in two pieces of control signaling, one piece of control signaling indicates the length of each of the F encoded sub-transport blocks, and the other piece of control signaling includes the B second fields or the B fourth fields.

1704: The receive end obtains the first transport block based on the B PB group numbers and the F sub-transport blocks.

A possible implementation of step 1704 is as follows: The receive end maps a PB in each sub-transport block back to the original TB based on the B PB group numbers, to obtain the first transport block. The foregoing describes a manner in which the transmit end divides the first transport block into the B PBs and obtains the F sub-transport blocks based on the B PBs. The receive end needs to obtain the first transport block based on the F sub-transport blocks. FIG. 18 is a diagram of data recovery according to an embodiment of this application. FIG. 18 shows a manner of mapping the PB in each sub-transport block back to the original TB based on the B PB group numbers. In FIG. 18, range indices (range indices) include the B PB group numbers, that is, $I_1$, $I_2$, ..., and $I_B$, a sub-TB 1, a sub-TB 2, ..., and a sub-TB F represent the F sub-transport blocks. The receive end initializes F counters (Counter_1=0, Counter_2=0, ..., and Counter_F=0) and a total counter Counter=0. Counter_1, Counter_2, ..., and Counter_F are sequentially counters corresponding to the sub-TB 1, the sub-TB 2, ..., and the sub-TB F. As shown in FIG. 18, the receive end needs to maintain F+1 counters, where the F counters are used to mark quantities of PBs read in sub-TBs, and the total counter is used to mark a quantity of PBs in the TB. The receive end sequentially reads $I_1$, $I_2$, ..., and $I_B$. When $I_m$ (m=1, ..., B) is read, it indicates that a current PB (corresponding to $I_m$) belongs to a sub-TB $I_m$, so that a corresponding Counter_$I_m$ is increased by 1 (where Counter is synchronously increased by 1), and then a bit corresponding to a Counter_$I_m$<sup>th</sup> PB in the sub-TB $I_m$ is extracted as a bit of a Counter<sup>th</sup> PB in the TB. That Counter_$I_m$ is increased by 1 (where Counter is synchronously increased by 1) may be represented as follows: Counter_$I_m$=Counter_$I_m$+1, and Counter=Counter+1.

An example of obtaining the first transport block based on the B PB group numbers and the F sub-transport blocks is as follows: Q=1 (that is, F=2), and B=4. In this case, the TB has a total of four PBs, and the four PBs are allocated to two sub-TBs. It is assumed that $I_1$=1, $I_2$=2, $I_3$=1, and $I_4$=1, in other words, a sub-TB 1 includes a PB 1, a PB 3, and a PB 4, and a sub-TB 2 includes a PB 2. Four sequence numbers obtained by the receive end through decoding are 1, 2, 1, and 1, the sub-TB 1 includes three PBs, and the sub-TB includes one PB. Three counters Counter_1, Counter_2, and Counter are initialized as 0. A data recovery process is as follows:

(1) First, for a 1<sup>st</sup> sequence number $I_1$=1, Counter_1=1 and Counter=1, and it is further obtained that a 1<sup>st</sup> PB bit value of the TB is a 1<sup>st</sup> PB in the sub-TB 1.
(2) Then, for a 2<sup>nd</sup> sequence number $I_2$=2, Counter_2=1 and Counter=2, and it is further obtained that a 2<sup>nd</sup> PB bit value of the TB is a 1<sup>st</sup> PB in the sub-TB 2.
(3) Then, for a 3<sup>rd</sup> sequence number $I_3$=1, Counter_1=2 and Counter=3, and it is further obtained that a 3<sup>rd</sup> PB bit value of the TB is a 2<sup>nd</sup> PB in the sub-TB 1.
(4) Finally, for a 4<sup>th</sup> sequence number $I_4$=1, Counter_1=3 and Counter=4, and it is further obtained that a 4<sup>th</sup> PB bit value of the TB is a 3<sup>rd</sup> PB in the sub-TB 1. In this way, recovery of the TB at the receive end is completed.

In this embodiment of this application, the transmit end can quickly and accurately perform reorganization based on the PB group numbers and the sub-transport blocks obtained through decoding, to obtain the TB sent by the transmit end, that is, the first transport block.

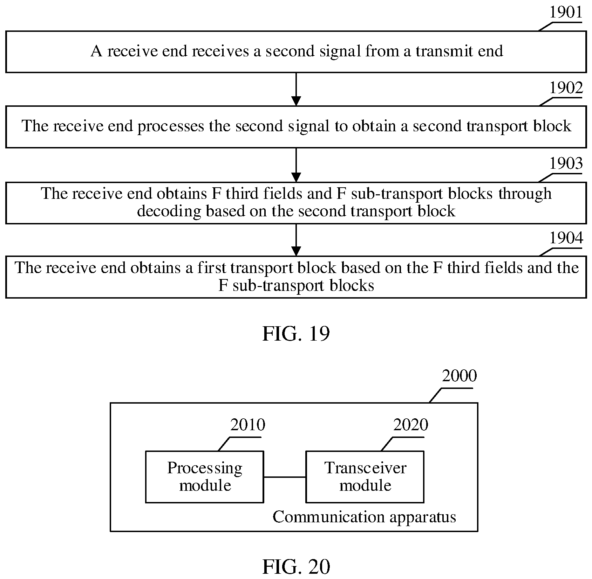

FIG. 19 is a flowchart of another decoding method according to an embodiment of this application. A method procedure in FIG. 19 is a possible implementation of the method described in FIG. 16. In this implementation, a transmit end performs reorganization based on a quantity of preprocess blocks in each sub-transport block and a sequence number of each preprocess block in a first transport block, to obtain the first transport block, so that a TB sent by a transmit end can be quickly and accurately obtained. As shown in FIG. 19, the method includes the following steps.

1901: The receive end receives a second signal from the transmit end.

For step 1901, refer to step 1701.

1902: The receive end processes the second signal to obtain a second transport block.

For step 1902, refer to step 1702.

The second transport block includes F encoded sub-transport blocks, and the F encoded sub-transport blocks may be decoded to obtain F sub-transport blocks. A first field in the second transport block may be decoded to obtain the foregoing indication field including F third fields. The F third fields are in one-to-one correspondence with the F sub-transport blocks, and a third field that is in the F third fields and that corresponds to a first sub-transport block indicates a quantity of preprocess blocks in the first sub-transport block and a sequence number of each preprocess block of the first sub-transport block in the first transport block. In other words, any third field indicates a quantity of preprocess blocks in a sub-transport block corresponding to the third field and a sequence number of each preprocess block of the sub-transport block in the first transport block.

1903: The receive end obtains the F third fields and the F sub-transport blocks through decoding based on the second transport block.

A possible implementation of step 1903 is as follows: obtaining the F third fields and the F sub-transport blocks through decoding based on first control information from the transmit end and the second transport block. The first control information indicates a length of each of the F encoded sub-transport blocks. Before decoding the second transport block, the receive end may receive the first control information.

In a possible implementation, the first control information indicates the length of each of the F encoded sub-transport blocks and the F third fields. Step 1903 may be replaced with: The receive end obtains the F sub-transport blocks through decoding based on the first control information and the second transport block; and obtains the F third fields based on the first control information.

Any third field indicates a quantity of preprocess blocks in a sub-transport block corresponding to the third field and a sequence number of each preprocess block of the sub-transport block in the first transport block. It may be understood that the receive end may determine, based on the F third fields, a sequence number of a PB of each sub-transport block in the first transport block.

1904: The receive end obtains the first transport block based on the F third fields and the F sub-transport blocks.

A possible implementation of step 1904 is as follows: sequentially obtaining, based on the F third fields, PBs whose sequence numbers are 1 to B from PBs included in the F sub-transport blocks, to obtain the first transport block. A PB whose sequence number is 1 is used as a $1^{st}$ PB in the first transport block, a PB whose sequence number is 2 is used as a $2^{nd}$ PB in the first transport block, and by analogy, a PB whose sequence number is B is used as a $B^{th}$ PB in the first transport block.

Eight sub-TBs are used as an example, that is, F is equal to 8, and a format of eight third fields is shown as follows:

$$\left[ |\mathbf{I}_1|, I_{1,1}, I_{1,2}, ..., I_{1,|I_1|}, |\mathbf{I}_2|, I_{2,1}, I_{2,2}, ..., I_{2,|I_2|}, ..., |\mathbf{I}_8|, I_{8,1}, I_{8,2}, ..., I_{8,|I_8|} \right].$$

$|\mathbf{I}_1|, |\mathbf{I}_2|, ...,$ and $|\mathbf{I}_8|$ respectively represent quantities of PBs included in a sub-TB 1, a sub-TB 2, ..., and a sub-TB 8, $I_{1,1}, I_{1,2},$ and $I_{1,|I_1|}$ represent sequence numbers, in the first transport block, of PBs included in the sub-TB 1, $I_{2,1}, I_{2,2}, ...,$ and $I_{2,|I_2|}$ represent sequence numbers, in the first transport block, of PBs included in the sub-TB 1, and $I_{8,1}, I_{8,2}, ...,$ and $I_{8,|I_8|}$ represent sequence numbers, in the first transport block, of PBs included in the sub-TB 8. For example, if $I_{1,2}$ is 1, it indicates that a sequence number of a $2^{nd}$ PB in the sub-TB 1 is 1.

For example, the receive end first searches for (or looks for) a sequence number 1, and uses a PB whose sequence number is 1 as a $1^{st}$ PB of the TB (namely, the first transport block); then searches for (or looks for) a sequence number 2, and uses a PB whose sequence number is 2 as a $1^{st}$ PB of the TB (namely, the first transport block); and the rest may be deduced by analogy until a PB whose sequence number is B is used as a $B^{th}$ PB of the TB (namely, the first transport block).

In this embodiment of this application, the transmit end performs reorganization based on the quantity of preprocess blocks in each sub-transport block and the sequence number of each preprocess block in the first transport block, to obtain the first transport block, so that required data, that is, the TB, can be quickly and accurately obtained.

The following describes, with reference to the accompanying drawings, structures of communication apparatuses (a transmit end and a receive end) that can implement embodiments of this application.

FIG. 20 is a diagram of a structure of a communication apparatus 2000 according to an embodiment of this application. The communication apparatus 2000 may correspondingly implement functions or steps implemented by a transmit end in the foregoing method embodiments, or may correspondingly implement functions or steps implemented by a receive end in the foregoing method embodiments. The communication apparatus may include a processing module 2010 and a transceiver module 2020. Optionally, the communication apparatus may further include a storage unit. The storage unit may be configured to store instructions (code or a program) and/or data. The processing module 2010 and the transceiver module 2020 may be coupled to the storage unit. For example, the processing module 2010 may read the instructions (the code or the program) and/or the data in the storage unit, to implement a corresponding method. The foregoing units may be independently disposed, or may be partially or completely integrated. For example, the transceiver module 2020 may include a sending module and a receiving module. The sending module may be a transmitter, and the receiving module may be a receiver. An entity corresponding to the transceiver module 2020 may be a transceiver, or may be a communication interface.

In some possible implementations, the communication apparatus 2000 can correspondingly implement behavior and functions of the transmit end in the foregoing method embodiments. For example, the communication apparatus 2000 may be the transmit end, or may be a component (for example, a chip or a circuit) used in the transmit end. For example, the transceiver module 2020 may be configured to perform all receiving or sending operations performed by the transmit end in the embodiments of FIG. 9, FIG. 11, and FIG. 15, for example, step 904 in the embodiment shown in FIG. 9, step 1105 and step 1106 in the embodiment shown in FIG. 11, and/or another process used to support the technology described in this specification. The processing module 2010 is configured to perform all operations performed by the transmit end in the embodiments of FIG. 9, FIG. 11, and FIG. 15 except receiving and sending operations, for example, step 901, step 902, and step 903 in the embodiment shown in FIG. 9, step 1101, step 1102, step 1103, and step 1104 in the embodiment shown in FIG. 11, and step 1501 to step 1506 in the embodiment shown in FIG. 15.

In some possible implementations, the communication apparatus 2000 can correspondingly implement behavior and functions of the receive end in the foregoing method embodiments. For example, the communication apparatus 2000 may be the receive end, or may be a component (for example, a chip or a circuit) used in the receive end. For example, the transceiver module 2020 may be configured to perform all receiving or sending operations performed by the receive end in the embodiments of FIG. 16, FIG. 17, and FIG. 19, for example, step 1701 in the embodiment shown in FIG. 17, step 1901 in the embodiment shown in FIG. 19, and/or another process used to support the technology described in this specification. The processing module 2010 is configured to perform all operations performed by the receive end except receiving and sending operations, for example, step 1601 and step 1602 in the embodiment shown in FIG. 16, step 1702, step 1703, and step 1704 in the embodiment shown in FIG. 17, and step 1902, step 1903, and step 1904 in the embodiment shown in FIG. 19.

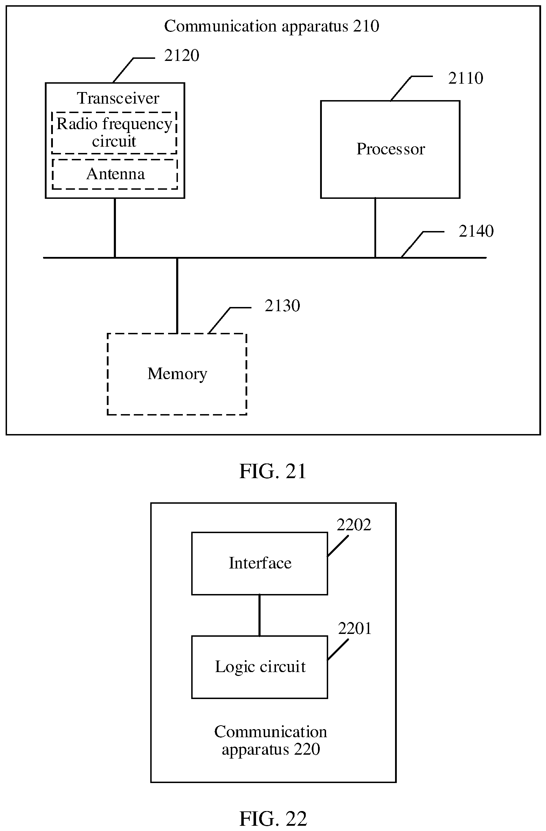

FIG. 21 is a diagram of a structure of another communication apparatus 210 according to an embodiment of this application. The communication apparatus in FIG. 21 may be the foregoing transmit end, or may be the foregoing receive end.

As shown in FIG. 21, the communication apparatus 210 includes at least one processor 2110 and a transceiver 2120.

In some embodiments of this application, the processor 2110 and the transceiver 2120 may be configured to perform functions, operations, or the like performed by the transmit end. For example, the transceiver 2120 performs all receiving or sending operations performed by the transmit end in the embodiments of FIG. 9, FIG. 11, and FIG. 15, for example, step 904 in the embodiment shown in FIG. 9, step 1105 and step 1106 in the embodiment shown in FIG. 11, and/or another process used to support the technology described in this specification. For example, the processor 2110 is configured to perform all operations performed by the transmit end in the embodiments of FIG. 9, FIG. 11, and FIG. 15 except receiving and sending operations, for example, step 901, step 902, and step 903 in the embodiment shown in FIG. 9, step 1101, step 1102, step 1103, and step 1104 in the embodiment shown in FIG. 11, and step 1501 to step 1506 in the embodiment shown in FIG. 15.

In some embodiments of this application, the processor 2110 and the transceiver 2120 may be configured to perform functions, operations, or the like performed by the access end. For example, the transceiver 2120 performs all receiving or sending operations performed by the receive end in the embodiments of FIG. 16, FIG. 17, and FIG. 19, for example, step 1701 in the embodiment shown in FIG. 17, step 1901 in the embodiment shown in FIG. 19, and/or another process used to support the technology described in this specification. The processor 2110 is configured to perform all operations performed by the receive end except receiving and sending operations, for example, step 1601 and step 1602 in the embodiment shown in FIG. 16, step 1702, step 1703, and step 1704 in the embodiment shown in FIG. 17, and step 1902, step 1903, and step 1904 in the embodiment shown in FIG. 19.

The transceiver 2120 is configured to communicate with another device/apparatus through a transmission medium. The processor 2110 receives and sends data and/or signaling through the transceiver 2120, and is configured to implement the method in the foregoing method embodiments. The processor 2110 may implement functions of the processing module 2010, and the transceiver 2120 may implement functions of the transceiver module 2020.

Optionally, the transceiver 2120 may include a radio frequency circuit and an antenna. The radio frequency circuit is mainly configured to perform conversion between a baseband signal and a radio frequency signal and process the radio frequency signal. The antenna is mainly configured to receive and send radio frequency signals in a form of an electromagnetic wave. An input/output apparatus, for example, a touchscreen, a display, or a keyboard, is mainly configured to receive data input by a user and output data to the user.

Optionally, the communication apparatus 210 may further include at least one memory 2130, configured to store program instructions and/or data. The memory 2130 is coupled to the processor 2110. Couplings in embodiments of this application are indirect couplings or communication connections between apparatuses, units, or modules, may be in electrical, mechanical, or other forms, and are used for information exchange between the apparatuses, units, or modules. The processor 2110 may cooperate with the memory 2130. The processor 2110 may execute the program instructions stored in the memory 2130. At least one of the at least one memory may be included in the processor.

After the communication apparatus 210 is powered on, the processor 2110 may read a software program in the memory 2130, interpret and execute instructions of the software program, and process data of the software program. When data needs to be sent in a wireless manner, the processor 2110 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 2110. The processor 2110 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 2120, the processor 2110, and the memory 2130 is not limited in this embodiment of this application. In this embodiment of this application, the memory 2130, the processor 2110, and the transceiver 2120 are connected through a bus 2140 in FIG. 21. The bus is represented by using a thick line in FIG. 21. A manner of a connection between other components is merely an example for description, and is not limited thereto. Buses may be classified into an address bus, a data bus, a control bus, and the like. For ease of representation, only one thick line is used to represent the bus in FIG. 21, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

FIG. 22 is a diagram of a structure of another communication apparatus 220 according to an embodiment of this application. As shown in FIG. 22, the communication apparatus shown in FIG. 22 includes a logic circuit 2201 and an interface 2202. The processing module 2010 in FIG. 20 may be implemented by using the logic circuit 2201, and the transceiver module 2020 in FIG. 20 may be implemented by using the interface 2202. The logic circuit 2201 may be a chip, a processing circuit, an integrated circuit, a system on chip (system on chip, SoC) chip, or the like. The interface 2202 may be a communication interface, an input/output interface, or the like. In this embodiment of this application, the logic circuit and the interface may alternatively be coupled to each other. A specific manner of connection between the logic circuit and the interface is not limited in this embodiment of this application.

In some embodiments of this application, the logic circuit and the interface may be configured to perform functions, operations, or the like performed by the transmit end.

In some embodiments of this application, the logic circuit and the interface may be configured to perform functions, operations, or the like performed by the receive end.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the method in the foregoing embodiments is performed.

This application further provides a communication system, including the transmit end and the receive end.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An encoding transmission method, comprising:

   obtaining a to-be-encoded first transport block;
   obtaining F sub-transport blocks based on the first transport block, wherein any sub-transport block comprises at least one preprocess block, probability distributions of all preprocess blocks comprised in the any sub-transport block belong to a same probability distribution range, probability distributions of preprocess blocks comprised in at least two of the F sub-transport blocks belong to different probability distribution ranges, and F is an integer greater than 1;
   encoding the F sub-transport blocks to obtain a second transport block, wherein the second transport block comprises F encoded sub-transport blocks, at least two of the F encoded sub-transport blocks correspond to different code rates, and the F encoded sub-transport blocks are obtained by encoding the F sub-transport blocks; and
   performing transmission based on the second transport block.

2. The method according to claim 1, wherein the method further comprises:
   sending first information carrying a first field, wherein the first field indicates a correspondence between the F sub-transport blocks and a bit stream in the first transport block, and/or indicates a probability distribution range to which a preprocess block comprised in each of the F sub-transport blocks belongs.

3. The method according to claim 2, wherein the first transport block comprises B preprocess blocks, the first field comprises B second fields, and the B second fields indicate probability distribution ranges corresponding to the B preprocess blocks.

4. The method according to any one of claims 1 to 3, wherein the method further comprises:
sending first control information to a receive end, wherein the first control information indicates a length of each of the F encoded sub-transport blocks.

5. The method according to any one of claims 1 to 4, wherein the encoding the F sub-transport blocks to obtain a second transport block comprises:
separately encoding the F sub-transport blocks to obtain the F encoded sub-transport blocks, wherein at least two of the F sub-transport blocks correspond to different coding matrices.

6. The method according to any one of claims 1 to 5, wherein the method further comprises:
receiving first retransmission information, wherein the first retransmission information indicates to retransmit a first code block group in a first sub-transport block, the first sub-transport block is one of the F encoded sub-transport blocks, and the first sub-transport block comprises a plurality of code block groups.

7. A decoding method, comprising:

obtaining a second transport block, wherein the second transport block comprises F encoded sub-transport blocks, at least two of the F encoded sub-transport blocks correspond to different code rates, the F encoded sub-transport blocks are obtained by encoding F sub-transport blocks, any sub-transport block comprises at least one preprocess block, probability distributions of all preprocess blocks comprised in the any sub-transport block belong to a same probability distribution range, probability distributions of preprocess blocks comprised in at least two of the F sub-transport blocks belong to different probability distribution ranges, F is an integer greater than 1, and the F sub-transport blocks are obtained based on a first transport block; and
obtaining the first transport block through decoding based on the second transport block.

8. The method according to claim 7, wherein the method further comprises:
receiving first information carrying a first field, wherein the first field indicates a correspondence between the F sub-transport blocks and a bit stream in the first transport block, and/or indicates a probability distribution range to which a preprocess block comprised in each of the F sub-transport blocks belongs.

9. The method according to claim 8, wherein the first transport block comprises B preprocess blocks, the first field comprises B second fields, and the B second fields indicate probability distribution ranges corresponding to the B preprocess blocks.

10. The method according to any one of claims 7 to 9, wherein

receiving first control information from a transmit end, wherein the first control information indicates a length of each of the F encoded sub-transport blocks; and
the obtaining the first transport block through decoding based on the second transport block comprises:
obtaining the first transport block through decoding based on the second transport block and the first control information.

11. The method according to any one of claims 7 to 10, wherein the method further comprises:
sending first retransmission information, wherein the first retransmission information indicates to retransmit a first code block group in a first sub-transport block, the first sub-transport block is one of the F encoded sub-transport blocks, and the first sub-transport block comprises a plurality of code block groups.

12. A communication apparatus, comprising:

a processing module, configured to obtain a to-be-encoded first transport block, wherein
the processing module is further configured to obtain F sub-transport blocks based on the first transport block, wherein any sub-transport block comprises at least one preprocess block, probability distributions of all preprocess blocks comprised in the any sub-transport block belong to a same probability distribution range, probability distributions of preprocess blocks comprised in at least two of the F sub-transport blocks belong to different probability distribution ranges, and F is an integer greater than 1; and

the processing module is further configured to encode the F sub-transport blocks to obtain a second transport block, wherein the second transport block comprises F encoded sub-transport blocks, at least two of the F encoded sub-transport blocks correspond to different code rates, and the F encoded sub-transport blocks are obtained by encoding the F sub-transport blocks; and

a transceiver module, configured to perform transmission based on the second transport block.

13. The apparatus according to claim 12, wherein

the transceiver module is further configured to send first information carrying a first field, wherein the first field indicates a correspondence between the F sub-transport blocks and a bit stream in the first transport block, and/or indicates a probability distribution range to which a preprocess block comprised in each of the F sub-transport blocks belongs.

14. The apparatus according to claim 13, wherein the first transport block comprises B preprocess blocks, the first field comprises B second fields, and the B second fields indicate probability distribution ranges corresponding to the B preprocess blocks.

15. The apparatus according to any one of claims 12 to 14, wherein

the transceiver module is further configured to send first control information to a receive end, wherein the first control information indicates a length of each of the F encoded sub-transport blocks.

16. The apparatus according to any one of claims 12 to 15, wherein

the processing module is specifically configured to separately encode the F sub-transport blocks to obtain the F encoded sub-transport blocks, wherein at least two of the F sub-transport blocks correspond to different coding matrices.

17. The apparatus according to any one of claims 12 to 16, wherein

the transceiver module is further configured to receive first retransmission information, wherein the first retransmission information indicates to retransmit a first code block group in a first sub-transport block, the first sub-transport block is one of the F encoded sub-transport blocks, and the first sub-transport block comprises a plurality of code block groups.

18. A communication apparatus, comprising:

a transceiver module, configured to receive a second signal; and

a processing module, configured to obtain a second transport block based on the second signal, wherein the second transport block comprises F encoded sub-transport blocks, at least two of the F encoded sub-transport blocks correspond to different code rates, the F encoded sub-transport blocks are obtained by encoding F sub-transport blocks, any sub-transport block comprises at least one preprocess block, probability distributions of all preprocess blocks comprised in the any sub-transport block belong to a same probability distribution range, probability distributions of preprocess blocks comprised in at least two of the F sub-transport blocks belong to different probability distribution ranges, F is an integer greater than 1, and the F sub-transport blocks are obtained based on a first transport block, wherein

the processing module is further configured to obtain the first transport block through decoding based on the second transport block.

19. The apparatus according to claim 18, wherein

the transceiver module is further configured to receive first information carrying a first field, wherein the first field indicates a correspondence between the F sub-transport blocks and a bit stream in the first transport block, and/or indicates a probability distribution range to which a preprocess block comprised in each of the F sub-transport blocks belongs.

20. The apparatus according to claim 19, wherein the first transport block comprises B preprocess blocks, the first field comprises B second fields, and the B second fields indicate probability distribution ranges corresponding to the B preprocess blocks.

21. The apparatus according to any one of claims 18 to 20, wherein

the transceiver module is further configured to receive first control information from a transmit end, wherein the first control information indicates a length of each of the F encoded sub-transport blocks; and
the processing module is specifically configured to obtain the first transport block through decoding based on the second transport block and the first control information.

22. The apparatus according to any one of claims 18 to 21, wherein
the transceiver module is further configured to send first retransmission information, wherein the first retransmission information indicates to retransmit a first code block group in a first sub-transport block, the first sub-transport block is one of the F encoded sub-transport blocks, and the first sub-transport block comprises a plurality of code block groups.

23. A computer-readable storage medium, wherein the computer-readable storage medium stores a computer program; the computer program comprises program instructions; and when the program instructions are executed, a computer is enabled to perform the method according to any one of claims 1 to 6; or when the program instructions are executed, a computer is enabled to perform the method according to any one of claims 7 to 11.

24. A communication apparatus, comprising a processor, wherein the processor is configured to: when executing instructions, enable the communication apparatus to perform the method according to any one of claims 1 to 6, or enable the communication apparatus to perform the method according to any one of claims 7 to 11.

25. The apparatus according to claim 24, wherein the apparatus further comprises a memory, and the memory is configured to store the instructions.

26. A communication system, comprising the communication apparatus according to any one of claims 12 to 17 and the communication apparatus according to any one of claims 18 to 22.

SSCC
Source
information → Source encoding → Channel encoding →Channel→ Channel decoding → Source decoding → Decoded information

JSCC
Source
information → Joint source-channel encoding →Channel→ Joint source-channel decoding → Decoded information

FIG. 1

Access network device

Terminal device

Terminal device

FIG. 2

Input bits (input bits) → Perform a CRC → Preprocess (preprocess) → Perform encoding processing → Combine (combine) → Output bits (output bits)

FIG. 3

To-be-encoded bits and CRC bits → Segment a TB into PBs (segment to PBs) → Calculate probability distributions (calculate distributions) → Group and reorganize into sub-transport blocks (group & reorganize into sub-TBs) → Plurality of sub-TBs

FIG. 4

| TB | CRC |

Calculate
probability
distributions
(calculate
distributions):

Segment the TB into
PBs (segment to PBs)

| PB 1 | PB 2 | PB 3 | ... | PB B–2 | PB B–1 | PB B |

$p_{1,1}$  $p_{1,2}$  $p_{1,3}$  $p_{1,B-2}$  $p_{1,B-1}$  $p_{1,B}$

Group
(group):

Distribution
range 1
(range 1)

Distribution
range 2
(range 2)

...

Distribution
range $2^Q$
(range $2^Q$)

Reorganize
(reorganize)

Sub-TB 1 | PB 1 | ... | PB B–1 |

Sub-TB 2 | PB 3 | ... | PB B–2 |

Sub-TB $2^Q$ | PB 2 | ... | PB B |

**FIG. 5**

Sub-TB → Segment the sub-transport block into CBs (segment to CBs) → Perform a CRC on each CB → Perform JSCC → Perform rate matching (rate matching) → Concatenate (concatenate) the CBs → Encoded sub-TB

**FIG. 6**

Encode systematically (encode systematically) → Puncture system bits (puncture system bits)

**FIG. 7**

Input bits (input bits) → Perform a CRC → Preprocess → Segment a sub-transport block into CBs → Perform a CRC on each CB → Perform JSCC → Perform rate matching → Concatenate the CBs → Combine → Output bits (output bits)

**FIG. 8**

901

A transmit end obtains a to-be-encoded first transport block

902

The transmit end obtains F sub-transport blocks based on the first transport block

903

Encode the F sub-transport blocks to obtain a second transport block

904

Perform transmission based on the second transport block

FIG. 9

1001

| Indication field | Sub-TB 1 | Sub-TB 2 | ⋯ | Sub-TB F |

Encode
(encode)

1002

1003                                          1004

| Second field | Sub-TB 1 | Sub-TB 2 | ⋯ | Sub-TB F |

FIG. 10

1101

A transmit end obtains a to-be-encoded first transport block

1102

The transmit end determines a size of preprocess blocks into which the first transport block is divided

1103

The transmit end obtains F sub-transport blocks based on the first transport block and the determined size of the preprocess blocks

1104

Encode the F sub-transport blocks to obtain a second transport block

1105

Perform transmission based on the second transport block

1106

Send first control information to a receive end

FIG. 11

| len 1 | len 2 | ... | $len\ 2^Q$ |

FIG. 12

| Sixth field | len 1 | len 4 | ... | $len\ 2^Q$ |

110110...1

FIG. 13

| Sub-TB 0 | Sub-TB 1 | Sub-TB 2 | ⋯ | Sub-TB F |
|---|---|---|---|---|

$C_0$ CBs $\quad$ $C_1$ CBs $\quad$ $C_2$ CBs $\qquad\qquad$ $C_F$ CBs

Manner 1 $\qquad$ Sub-TB 0: 0, 1, ..., $C_0-1$

$\qquad\qquad$ Sub-TB 1: $C_0, C_0+1, ..., C_0+C_1-1$

$$\vdots$$

$\qquad$ Sub-TB 1: $C_0+C_1...+C_{F-1}, ..., C_0+...+C_{F-1}+C_F-1$

A number m of any CBG satisfies $0 \leq m \leq M-1$, where M represents a quantity of CBGs

Manner 2 $\qquad$ Sub-TB 0: 0, 1, ..., $C_0-1$

$\qquad\qquad$ Sub-TB 1: 0, 1, ..., $C_1-1$

$$\vdots$$

$\qquad$ Sub-TB F: 0, 1, ..., $C_F-1$

A sub-TB number s and a CBG number m satisfy $0 \leq s \leq F$ and $0 \leq m \leq M_s-1$, where F represents a quantity of sub-TBs, and $M_s$ represents a quantity of CBGs of each sub-TB

FIG. 14

1501

A transmit end obtains a TB initial value

1502

The transmit end divides to-be-sent data into blocks based on the TB initial value to obtain a plurality of PBs, and calculates probability distributions of the PBs

1503

The transmit end determines, based on the probability distributions of the PBs, symbol lengths of the PBs that are obtained after encoding and modulation of the PBs, and calculates a total symbol length of the symbol lengths of the PBs that are obtained after encoding and modulation of the PBs

1504

When the total symbol length is less than an allocated transmission resource, obtain one or more newly added PBs

1505

The transmit end determines, based on probability distributions of the one or more newly added PBs, symbol lengths of the one or more PBs that are obtained after encoding and modulation of the one or more PBs, and superimposes the symbol lengths of the one or more PBs that are obtained after encoding and modulation of the one or more PBs to the total symbol length

1506

The transmit end repeatedly performs step 1504 and step 1505 until a maximum TB size that meets a transmission resource constraint is obtained

FIG. 15

1601

A receive end obtains a second transport block

1602

The receive end obtains a first transport block through decoding based on the second transport block

FIG. 16

1701

A receive end receives a second signal from a transmit end

1702

The receive end processes the second signal to obtain a second transport block

1703

The receive end obtains B PB group numbers and F sub-transport blocks through decoding based on the second transport block

1704

The receive end obtains a first transport block based on the B PB group numbers and the F sub-transport blocks

FIG. 17

| Range indices (range indices) | Sub-TB 1 | Sub-TB 2 | ... | Sub-TB F |
|---|---|---|---|---|

BQ bits | A+L bits

$I_1, I_2, ..., $ and $I_B$

Sub-TB 1 | PB | ... | PB |
Sub-TB 2 | PB | ... | PB |
⋮
Sub-TB F | PB | ... | PB |

Data recovery

A receive end sequentially reads $I_1$, $I_2$, ..., and $I_B$: When $I_m$ (m=1, ..., B) is read, it indicates that a current PB (corresponding to $I_m$) belongs to a sub-TB $I_m$, so that a corresponding Counter_$I_m$ is increased by 1 (where Counter is synchronously increased by 1), and then a bit corresponding to a Counter_$I_m$[th] PB in the sub-TB $I_m$ is extracted as a bit of a Counter[th] PB in a TB

FIG. 18

1901

A receive end receives a second signal from a transmit end

1902

The receive end processes the second signal to obtain a second transport block

1903

The receive end obtains F third fields and F sub-transport blocks through decoding based on the second transport block

1904

The receive end obtains a first transport block based on the F third fields and the F sub-transport blocks

FIG. 19

2000

2010

2020

Processing module

Transceiver module

Communication apparatus

FIG. 20

Communication apparatus 210

2120

Transceiver

Radio frequency circuit

Antenna

2110

Processor

2140

2130

Memory

FIG. 21

2202

Interface

2201

Logic circuit

Communication apparatus 220

FIG. 22

# EP 4 539 367 A1

| | International application No. |
|---|---|
| | **PCT/CN2023/096925** |

**A.  CLASSIFICATION OF SUBJECT MATTER**

H04L1/00(2006.01)i

According to International Patent Classification (IPC) or to both national classification and IPC

**B.  FIELDS SEARCHED**

Minimum documentation searched (classification system followed by classification symbols)

IPC:  H04L,H04W

Documentation searched other than minimum documentation to the extent that such documents are included in the fields searched

Electronic data base consulted during the international search (name of data base and, where practicable, search terms used)

CNABS, CNTXT, WPABS, ENTXT, CNKI: 编码, 译码, 解码, 编码方式, 编码矩阵, 编码块, 码率, 不同, 不相同, 传输块, 概率, 分布, 分块, 分组, 预处理, 重排, 重组, 子传输块, encode, decode, coding mode, coding matrix, coding block, code rate, different, transmission block, TB, probability, distribution, segment, group, preprocess, rearrangement, concatenate, sub-TB

**C.  DOCUMENTS CONSIDERED TO BE RELEVANT**

| Category* | Citation of document, with indication, where appropriate, of the relevant passages | Relevant to claim No. |
|---|---|---|
| A | CN 104144030 A (ZTE CORP.) 12 November 2014 (2014-11-12)<br>entire document | 1-26 |
| A | CN 108282258 A (HUAWEI TECHNOLOGIES CO., LTD.) 13 July 2018 (2018-07-13)<br>entire document | 1-26 |
| A | CN 114448558 A (HUAWEI TECHNOLOGIES CO., LTD.) 06 May 2022 (2022-05-06)<br>entire document | 1-26 |
| A | US 2017367054 A1 (ELECTRONICS AND TELECOMMUNICATIONS RESEARCH INSTITUTE et al.) 21 December 2017 (2017-12-21)<br>entire document | 1-26 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 August 2023** | **31 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/096925**

| Patent document cited in search report | | | Publication date (day/month/year) | Patent family member(s) | | | Publication date (day/month/year) |
|---|---|---|---|---|---|---|---|
| CN | 104144030 | A | 12 November 2014 | EP | 2985935 | A1 | 17 February 2016 |
| | | | | EP | 2985935 | A4 | 20 April 2016 |
| | | | | US | 2016143011 | A1 | 19 May 2016 |
| | | | | US | 10142982 | B2 | 27 November 2018 |
| | | | | WO | 2014180185 | A1 | 13 November 2014 |
| CN | 108282258 | A | 13 July 2018 | None | | | |
| CN | 114448558 | A | 06 May 2022 | None | | | |
| US | 2017367054 | A1 | 21 December 2017 | US | 10237035 | B2 | 19 March 2019 |

Form PCT/ISA/210 (patent family annex) (July 2022)

**EP 4 539 367 A1**

**Patent documents cited in the description**

- CN 202210718953